# EUROPEAN PATENT APPLICATION

(11) **EP 4 668 850 A1**
(43) Date of publication of application: **24.12.2025**
(21) Application number: 24775078.9
(22) Date of filing: 22.02.2024
(51) Int. Cl.: H04W 28/24, H04L 41/5019, H04L 41/5067, H04W 48/18, H04L 43/0876, H04W 88/08

(54) **DEVICE AND METHOD FOR ENSURING SERVICE LEVEL AGREEMENT TERMS OF TERMINAL IN WIRELESS COMMUNICATION SYSTEM**

(30) Priority: 17.03.2023 KR 20230035455
(71) Applicant: Samsung Electronics Co., Ltd., Suwon-si, Gyeonggi-do 16677 (KR)
(72) Inventor: KANG, Seungwon, Suwon-si Gyeonggi-do 16677 (KR); KHO, Youngsung, Suwon-si Gyeonggi-do 16677 (KR); KIM, Chulmin, Suwon-si Gyeonggi-do 16677 (KR); SONG, Junhyuk, Suwon-si Gyeonggi-do 16677 (KR); LEE, Chungkeun, Suwon-si Gyeonggi-do 16677 (KR)
(74) Representative: Gulde & Partner
(86) International application number: PCT/KR2024/002309
(87) International publication number: WO 2024/196030

(57) **Abstract**

An operation method of an RIC for ensuring a service level agreement in a wireless communication system comprises the steps of: transmitting, to an O-DU, a subscription request message including configuration information for reporting whether the service level agreement is satisfied for each terminal or terminal group; receiving an indication message including information on whether the service level agreement is satisfied, from the O-DU through an E2 interface; and transmitting, to the O-DU, a control message including scheduling information configured on the basis of the indication message.

## Description

### [Technical Field]

The disclosure relates generally to a wireless access network and, more specifically, to a device and a method for ensuring a service level agreement term in a wireless access network included in a wireless communication system.

### [Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a "beyond 4G network" communication system or a "post long term evolution (post LTE)" system.

The 5G communication system is considered to be implemented in ultrahigh frequency bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed. With the advance of wireless communication systems as described above, various services can be provided, and accordingly there is a need for schemes to smoothly provide these services. In particular, there is a need for a technology to support services newly requested in a wireless communication system.

Upon commercialization of a 5G system or new radio or next radio (NR) to satisfy demands for radio data traffic, a service having a high data transmission rate is provided to a user through the 5G system like 4G, and it is expected that wireless communication services having various purposes such as the Internet of things and services requiring high reliability for a specific purpose will be provided. In the current system in which the 4th generation communication system and the 5th generation system coexist, an open radio access network (O-RAN) established together by operators and equipment providing companies defines a new network element (NE) and the interface standard, based the existing 3GPP standard, and suggests an O-RAN structure.

### [Disclosure of Invention]

### [Technical Problem]

In accordance with the above discussion, the disclosure is to provide a device and a method for ensuring a service level agreement term in a wireless access network included in a wireless communication system.

### [Solution to Problem]

According to various embodiments disclosed herein, a method performed by a radio access network intelligent controller (RIC) in a wireless communication system, the method comprising: transmitting, to an open radio access network distributed unit (O-DU), a subscription request message including configuration information for reporting whether a service level agreement is satisfied for each terminal or terminal group; receiving, from the O-DU through an E2 interface, an indication message including information on whether the service level agreement is satisfied; and transmitting, to the O-DU, a control message including scheduling information configured based on the indication message.

According to various embodiments disclosed herein, a method performed by an open radio access network distributed unit (O-DU) in a wireless communication system, the method comprising: receiving, from a radio access network intelligent controller (RIC), a subscription request message including configuration information for reporting whether a service level agreement is satisfied for each terminal or terminal group; transmitting, to the RIC through an E2 interface, an indication message including information on whether the service level agreement is satisfied; and receiving, from the RIC, a control message including scheduling information configured based on the indication message.

According to various embodiments disclosed herein, a radio access network intelligent controller (RIC) in a wireless communication system, the RIC comprising: a transceiver; and at least one processor coupled with the transceiver and configured to: transmit, to an open radio access network distributed unit (O-DU), a subscription request message including configuration information for reporting whether a service level agreement is satisfied for each terminal or terminal group, receive, from the O-DU through an E2 interface, an indication message including information on whether the service level agreement is satisfied, and transmit, to the O-DU, a control message including scheduling information configured based on the indication message.

According to various embodiments disclosed herein, An open radio access network distributed unit (O-DU) in a wireless communication system, the O-DU comprising: a transceiver; and at least one processor coupled with the transceiver and configured to: receive, from a radio access network intelligent controller (RIC), a subscription request message including configuration information for reporting whether a service level agreement is satisfied for each terminal or terminal group, transmit, to the RIC through an E2 interface, an indication message including information on whether the service level agreement is satisfied, and receive, from the RIC, a control message including scheduling information configured based on the indication message.

### [Advantageous Effects of Invention]

According to a method and a device according to various embodiments of the disclosure, a radio access network intelligence controller (RIC) may collect target quality of service (QoS)/quality of experience (QoE) violation information on each terminal so as to accurately determine a degree of satisfaction with a service level agreement compared to an average QoS/QoE performance value of each terminal. Therefore, the RIC may be able to perform control by considering a different service satisfaction ratio for each terminal.

In addition, the RIC may collect target QoS/QoE violation information on each terminal group in order to determine whether a service level agreement is satisfied for a particular terminal group, and the collection may reduce interface load compared to receiving QoS/QoE information on all terminals.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates an example of a 4^{th} generation (4G) long-term evolution (LTE) core system.
FIG. 2A illustrates an example of a 5^{th} generation (5G) non-standalone (NSA) system.
FIG. 2B illustrates an example of architecture for an O-RAN.
FIG. 3 illustrates a protocol stack of an E2 application protocol message in a radio access network according to various embodiments of the disclosure.
FIG. 4 illustrates an example of connection between a base station and a radio access network intelligence controller (RIC) in a radio access network according to various embodiments of the disclosure.
FIG. 5 illustrates a structure of a device in a radio access network according to various embodiments of the disclosure.
FIG. 6 illustrates a logical function related to an E2 node and an E2 message of an RIC in a radio access network according to various embodiments of the disclosure.
FIG. 7 illustrates a procedure for E2 RIC control between an E2 node and an IRC in a radio access network according to various embodiments of the disclosure.
FIG. 8 illustrates a QoS/QoE for each UE according to various embodiments of the disclosure.
FIG. 9 illustrates a target QoS/QoE KPI setup and report procedure between an RIC and a RAN according to various embodiments of the disclosure.
FIG. 10 illustrates a standardized interface for designating a target QoS/QoE value in units of terminals according to various embodiments of the disclosure.
FIG. 11 illustrates a standardized interface for designating a target QoS/QoE value in units of terminal groups according to various embodiments of the disclosure.
FIG. 12 illustrates a standardized interface for designating a target QoS/QoE value of a network slice to which a terminal belongs according to various embodiments of the disclosure.
FIG. 13 illustrates a standardized interface for designating a target QoS/QoE value of a network slice group to which a terminal belongs according to various embodiments of the disclosure.
FIG. 14 illustrates a sequence of a control procedure for an O-DU, based on a target QoS/QoE violation ratio of each terminal according to various embodiments of the disclosure.
FIG. 15 illustrates target QoS/QoE-related information on each terminal reported by an O-DU according to various embodiments of the disclosure.
FIG. 16 illustrates a sequence of a control procedure for an O-DU, based on a target QoS/QoE violation ratio of each terminal according to various embodiments of the disclosure.
FIG. 17 illustrates target QoS/QoE-related information on each terminal reported by an O-DU according to various embodiments of the disclosure.
FIG. 18 illustrates a sequence of a control procedure for an O-DU, based on a target QoS/QoE violation ratio of each terminal according to various embodiments of the disclosure.
FIG. 19 illustrates target QoS/QoE-related information on each terminal reported by an O-DU according to various embodiments of the disclosure.
FIG. 20 illustrates a sequence of a control procedure for an O-DU, based on a target QoS/QoE violation ratio of each terminal according to various embodiments of the disclosure.
FIG. 21 illustrates target QoS/QoE-related information on each terminal reported by an O-DU according to various embodiments of the disclosure.
FIG. 22 illustrates a sequence of a control procedure for an O-DU, based on a target QoS/QoE violation ratio of each terminal group according to various embodiments of the disclosure.
FIG. 23 illustrates target QoS/QoE-related information on each terminal group reported by an O-DU according to various embodiments of the disclosure.
FIG. 24 illustrates a sequence of a control procedure for an O-DU, based on a target QoS/QoE violation ratio of each terminal group according to various embodiments of the disclosure.
FIG. 25 illustrates target QoS/QoE-related information on each terminal group reported by an O-DU according to various embodiments of the disclosure.
FIG. 26 illustrates a sequence of a control procedure for an O-DU, based on a target QoS/QoE violation ratio of each terminal group according to various embodiments of the disclosure.
FIG. 27 illustrates target QoS/QoE-related information on each terminal group reported by an O-DU according to various embodiments of the disclosure.
FIG. 28 illustrates a sequence of a control procedure for an O-DU, based on a target QoS/QoE violation ratio of each terminal group according to various embodiments of the disclosure.
FIG. 29 illustrates target QoS/QoE-related information on each terminal group reported by an O-DU according to various embodiments of the disclosure.
FIG. 30 illustrates a sequence of a control procedure between an RIC and an O-DU, based on a target QoS/QoE violation ratio according to various embodiments of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

Hereinafter, the disclosure describes a technology for providing a proprietary service of an operator through an E2 interface (I/F) when operations such as subscription, indication, and control are performed between an apparatus within a radio access network (hereinafter, "RAN") of a wireless communication system and an apparatus controlling the RAN.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

As a 4^{th} generation (4G)/5^{th} generation (5G) communication system (e.g., new radio (NR)) is commercialized, a service support differentiated for a user has been required in a virtualized network. Accordingly, an open radio access network (O-RAN) has newly defined a radio unit (RU), a distributed unit (DU), a central unit (CU)-control plane (CP), and a CU-user plane (UP), which are nodes constituting a 3GPP network entity (NE) and a base station, as an O-RAN (O)-RU, an O-DU, an O-CU-CP, and an O-CU-UP, respectively, and other than the nodes, has additionally standardized a near-real-time (NRT) radio access network intelligent controller (RIC). The disclosure is to support an operator-specific service model in an E2 interface through which an NRT RIC (hereinafter, referred to as "RIC") requests a service to the O-DU, the O-CU-CP, or the O-CU-UP. Here, the O-RU, the O-DU, the O-CU-CP, and the O-CU-UP may be understood as entities constituting an RAN capable of operating according to the O-RAN standard, and may be called E2 nodes. An interface with the entities constituting the RAN capable of operating according to the O-RAN standard between the RIC and the E2 nodes uses an E2 application protocol (E2AP).

The RIC is a logical node capable of collecting information in a cell site where the O-DU, the O-CU-CP, or the O-CU-UP performs transmission or reception with a UE. The RIC may be implemented in the form of servers centrally arranged in one physical place. Connection may be made through Ethernet between the O-DU and the RIC, between the O-CU-CP and the RIC, and between the O-CU-UP and the RIC. To this end, an interface standard for communication between the O-DU and the RIC, between the O-CU-CP and the RIC, and between the O-CU-UP and the RIC is required, and a message standard such as an E2-DU, an E2-CU-CP, and an E2-CU-UP and the definition of a procedure between the O-DU, the O-CU-CP, or the O-CU-UP and the RIC is required. Specifically, a service support differentiated for a user is required in a virtualized network, and there is a need for the definition of a function of a message of the E2-DU, the E2-CU-CP, or the E2-CU-UP for supporting a service for wide-area cell coverage by concentrating call processing messages/functions generated in the O-RAN on the RIC.

Specifically, the RIC may perform communication for the O-DU, the O-CU-CP, and the O-CU-UP by using the E2 interface, and configure an event occurrence condition by generating and transmitting a subscription message. The transmission may be performed through an E2 indication/report. Control over the O-DU, the O-CU-CP, and the O-CU-UP may be provided using an E2 control message.

In the 5G communication system, network slicing is network architecture enabling multiplexing of virtualized and independent logical networks on the same physical network infrastructure. Each network slice may indicate an isolated end-to-end network adjusted to fulfil requirements requested by a specific application. Accordingly, multiple virtualized logical networks may exist in one physical network, and at least one O-RU may be connected to each network slice or network slice group. In addition, a quality of service (QoS)/quality of experience (QoE) including at least one of the throughput, latency, reliability, or mean opinion score (MOS), which is different for each network slice, may be required as a service level agreement. The service level agreement may be guaranteed as an agreement between a provider and a user with respect to service target values when services are provided to the user. Hereinafter, the QoS/QoE may be referred to as QoS and/or QoE.

Hereinafter, embodiments of the disclosure provide a method and a device for collecting, by an RIC, target QoS/QoE violation information on each terminal or terminal group belonging to all or a particular network slice (group). Therefore, the RIC may configure, in an O-DU, a key performance indicator (KPI) to be reported by the O-DU. In addition, the disclosure provides a method and a device for performing, by an RIC, a control operation for each terminal or terminal group, based on target QoS/QoE violation information on each terminal or terminal group collected from the O-DU.

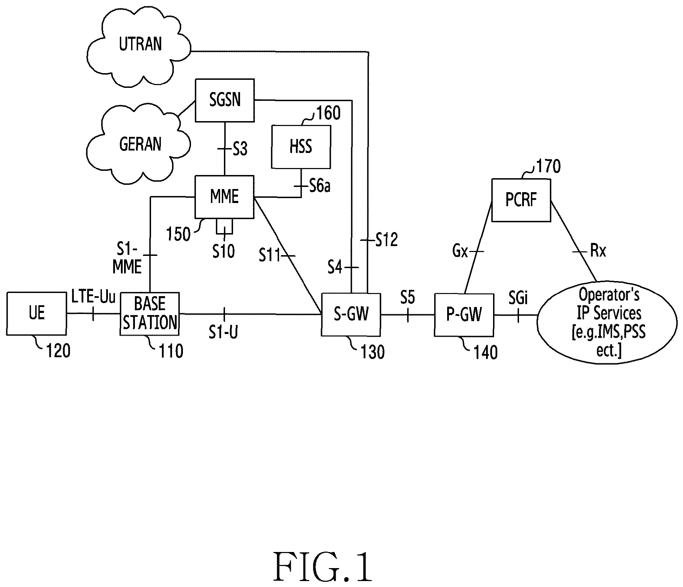

FIG. 1 illustrates an example of a 4^{th} generation (4G) long-term evolution (LTE) core system.

Referring to FIG. 1, an LTE core system may include a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 may be a network infrastructure that provides radio access to the terminal 120. For example, the base station 110 may be a device that performs scheduling by collecting state information such as a buffer state, available transmission power, and channel state of the terminal 110. The base station 110 may have coverage defined as a predetermined geographical area based on a distance in which signals can be transmitted. The base station 110 may be connected to the MME 150 through an S1-MME interface. In addition to base station, the base station 110 may be referred to as "access point (AP)," "eNodeB (eNB)," "wireless point," "transmission/reception point (TRP)," or other terms having equivalent technical meanings.

The terminal 120 is a device used by a user, and may perform communication with the base station 110 through a wireless channel. For some cases, the terminal 120 may be operated without user's involvement. That is, at least one of the terminal 120 and the terminal 130 is a device performing machine type communication (MTC), and may not be carried by the user. In addition to the terminal, the terminal 120 may be referred to as "user equipment (UE)," "mobile station," "subscriber station," "remote terminal," "wireless terminal," or "user device," or other terms having equivalent technical meanings.

The S-GW 130 may provide a data bearer, and may generate or control the data bearer upon the control of the MME 150. For example, the S-GW 130 may process a packet having arrived from the base station 110 or a packet to be forwarded to the base station 110. In addition, the S-GW 130 may perform an anchoring role at handover between base stations of the terminal 120. The P-GW 140 may function as a connection point with an external network (e.g., the Internet network). In addition, the P-GW 140 may allocate an Internet protocol (IP) address to the terminal 120, and may perform an anchoring role for the S-GW 130. In addition, the P-GW 140 may apply a quality of service (QoS) policy of the terminal 120, and manage account data.

The MME 150 may manage the mobility of the terminal 120. In addition, the MME 150 may perform authentication on the terminal 120, bearer management, etc. That is, the MME 150 may take charge of mobility management and various kinds of control functions for the terminal. The MME 150 may interwork with a serving GPRS support node (SGSN).

The HSS 160 may store key information for authentication of the terminal 120, and a subscriber profile. The key information and the subscriber profile may be forwarded from the HSS 160 to the MME 150 when the terminal 120 accesses a network.

The PCRF 170 may define a policy, and a rule for charging. The stored information may be forwarded from the PCRF 180 to the P-GW 140, and the P-GW 140 may perform control (e.g., QoS management, charging, etc.) for the terminal 120, based on the information provided from the PCRF 180.

A carrier aggregation (hereinafter, referred to as "CA") technology is a technology for combining multiple component carriers, and enabling one terminal transmitting or receiving a signal by simultaneously using the multiple component carriers, thereby increasing a frequency use efficiency from the perspective of the terminal or the base station. Specifically, according to the CA technology, the terminal and the base station may transmit or receive a broadband signal in a wideband by using the multiple component carriers in each of uplink (UL) and downlink (DL), and in this case, the respective component carriers are located in different frequency bands. Hereinafter, uplink may refer to a communication link in which the terminal transmits a signal to the base station, and downlink may refer to a communication link in which the base station transmits a signal to the terminal. In this case, the numbers of uplink component carriers and downlink component carriers may be different from each other.

A dual connectivity or multi connectivity technology is a technology enabling one terminal to be connected to multiple different base stations and transmit or receive a signal by simultaneously using carriers within the respective multiple base stations, located in different frequency bands, thereby increasing the frequency use efficiency from the perspective of the terminal or the base station. The terminal may be simultaneously connected to a first base station (e.g., a base station for providing a service by using an LTE technology or a 4G mobile communication technology) and a second base station (e.g., a base station for providing a service by using a new radio (NR) technology or a 5^{th} generation (5G) mobile communication technology), and transmit or receive traffic. In this case, frequency resources used by the respective base stations may be located in different bands. A scheme of operating based on an LTE and NR dual connectivity scheme as above may be called 5G non-standard alone (NSA).

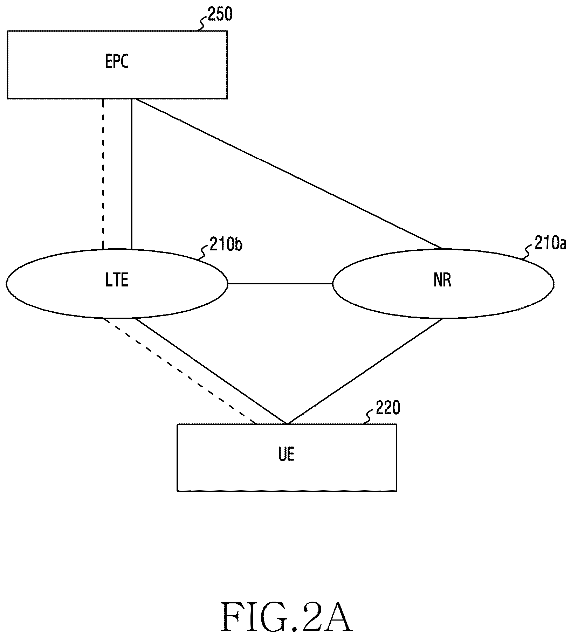

FIG. 2A illustrates an example of a 5^{th} generation (5G) non-standalone (NSA) system.

Referring to FIG. 2A, the 5G NSA system includes an NR RAN 210a, an LTE RAN 210b, a terminal 220, and an evolved packet core (EPC) 250. The NR RAN 210a and the LTE RAN 210b may be connected to the EPC 150, and the terminal 220 may receive a service simultaneously from any one of or both the NR RAN 210a and the LTE RAN 210b. The NR RAN 210a may include at least one NR base station, and the LTE RAN 210b includes at least one LTE base station. Here, the NR base station may be referred to as "5^{th} generation (5G) node," "next generation nodeB (gNB)," or other terms having equivalent technical meanings. In addition, the NR base station may have a structure divided into a central unit (CU) and a digital unit (DU), and the CU may have a structure divided into a CU-control plane (CP) unit and a CU-user plane (UP) unit.

In the structure of FIG. 2A, the terminal 220 may perform radio resource control (RRC) access through a first base station (e.g., a base station belonging to the LTE RAN 210b), and receive a service of a function (e.g., connection management, mobility management, etc.) provided on a control plane. In addition, the terminal 220 may receive an additional wireless resource for transmitting or receiving data through a second base station (e.g., a base station belonging to the NR RAN 210a). A dual connectivity technology using such LTE and NR may be referred to as evolved universal terrestrial radio access (E-UTRA)-NR dual connectivity (EN-DC). Similarly, a dual connectivity technology in which the first base station uses an NR technology and the second base station uses an LTE technology may be referred to as NR-E-UTRA dual connectivity (NE-DC). In addition, various embodiments may be applied to other various forms of multiple connectivity and carrier aggregation technology. In addition, various embodiments may be applied even to a case where when a first system using a first communication technology and a second system using a second communication technology are implemented in one device or a case where the first base station and the second base station are located in the same geographical location.

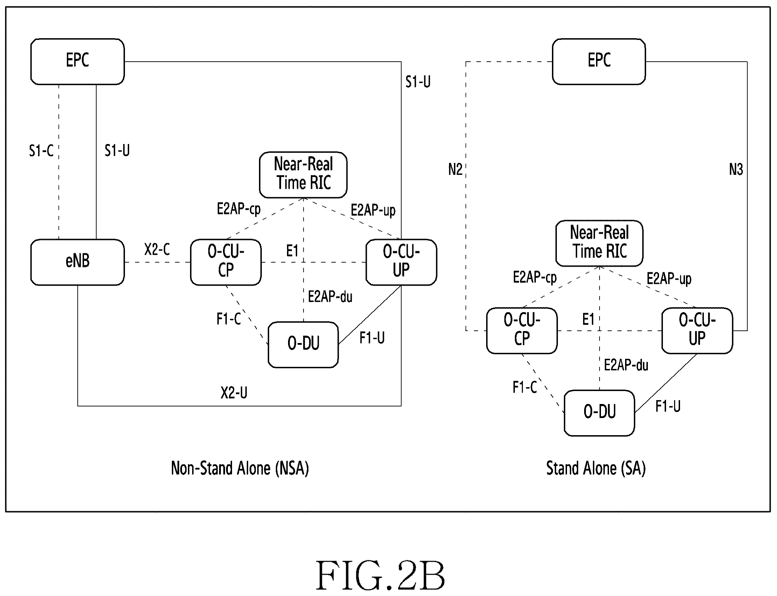

FIG. 2B illustrates an example of architecture for an O-RAN. For the purpose of E2 service model key performance indicator (KPI) monitoring (E2-SM-KPIMON), an O-RAN non-standalone mode in a multi-connectivity operation using an E-UTRA and NR radio access technology is considered, while an E2 node may be assumed to be in an O-RAN standalone mode.

Referring to FIG. 2B, in the deployment of the O-RAN non-standalone mode, an eNB may be connected to an EPC through an S1-C/S1-U interface, and may be connected to an O-CU-CP through an X2 interface. In the deployment of the O-RAN standalone mode, an O-CU-CP may be connected to a 5G core (5GC) through an N2/N3 interface.

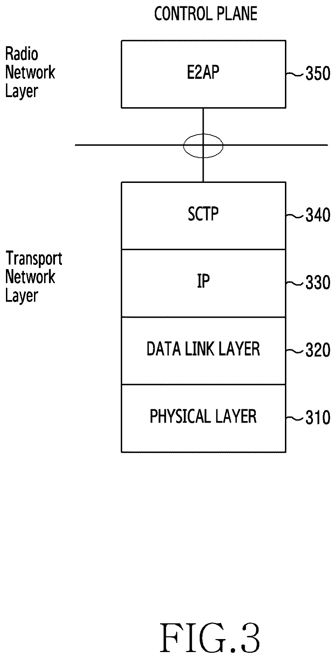

FIG. 3 illustrates a protocol stack of an E2 application protocol message in a radio access network according to various embodiments of the disclosure. Referring to FIG. 3, a control plane includes a transport network layer and a radio network layer. The transport network layer may include a physical layer 310, a data link layer 320, an Internet protocol (IP) 330, and a stream control transmission protocol (SCTP) 340.

The radio network layer includes an E2AP 350. The E2AP 350 is used to forward a subscription message, an indication message, a control message, a service update message, and a service query message, and may be transmitted over the SCTP 340 and the IP 330.

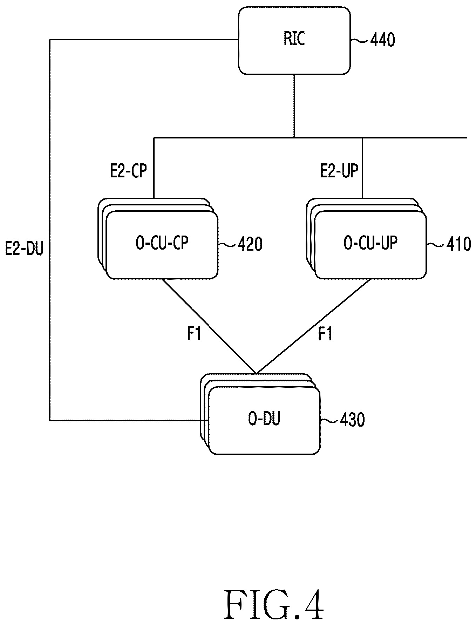

FIG. 4 illustrates an example of connection between a base station and an RIC in a radio access network according to various embodiments of the disclosure.

Referring to FIG. 4, an RIC 440 is connected to an O-CU-CP 420, an O-CU-UP 410, and an O-DU 430. The RIC 440 is a device for customizing an RAN functionality for new service or regional resource optimization. The RIC 440 may provide a function such as network intelligence (e.g., policy enforcement and handover optimization), resource assurance (e.g., radio-link management and advanced self-organized-network (SON)), and resource control (e.g., load balancing and slicing policy). The RIC 440 may perform communication with the O-CU-CP 420, the O-CU-UP 410, and the O-DU 430. The RIC 440 can be connected to each node through an E2-CP, E2-UP, or E2-DU interface. In addition, an interface between the O-CU-CP and the DU and between the O-CU-UP and the DU may be referred to as an F1 interface. In the following description, the DU and the O-DU, the CU-CP and the O-CU-CP, or the CU-UP and the O-CU-UP may be interchangeably used.

FIG. 4 illustrates one RIC 440, but according to various embodiments, multiple RICs may exist. The multiple RICs may be implemented in multiple hardware units located in the same physical position or may be implemented through virtualization using one hardware unit.

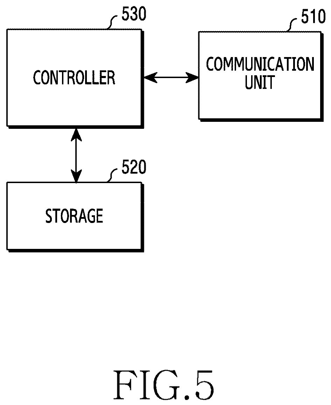

FIG. 5 illustrates a structure of a device according to various embodiments of the disclosure. The structure illustrated in FIG. 5 may be understood as a structure of a device having at least one function among the O-CU-CP, O-CU-UP, and O-DU in FIG. 4. As used herein, such terms as "... unit" and "... er" refer to a unit configured to process at least one function or operation, and may be implemented as hardware, software, or a combination of hardware and software.

Referring to FIG. 5, a core network device may include a communication unit 510, a storage 520, and a controller 530.

The communication unit 510 may provide an interface for communicating with other devices in the network. That is, the communication unit 510 may convert a bitstring, transmitted from the core network device to any other device, into a physical signal, and convert a physical signal, received from any other device, into a bitstring. The communication unit 510 may transmit/receive signals. Accordingly, the communication unit 510 may be referred to as a modem, a transmitter, a receiver, or a transceiver. The communication unit 510 enables the core network device to communicate with other devices or the system via a backhaul connection (e.g., wired backhaul or wireless backhaul) or via the network.

The storage 520 may store basic programs, application programs, and data, such as configuration information, for operation of the core network device. The storage 520 may include a volatile memory, a nonvolatile memory, or a combination of a volatile memory and a nonvolatile memory. In addition, the storage 520 may provide the stored data at the request of the controller 530.

The controller 530 may control the overall operation of the core network device. For example, the controller 530 may transmit and receive a signal through the communication unit 510. In addition, the controller 530 records data in the storage 520 and reads the data from the storage 520. To this end, the controller 530 may include at least one processor. According to various embodiments, the controller 530 may control the device to perform the operations according to various embodiments set forth herein.

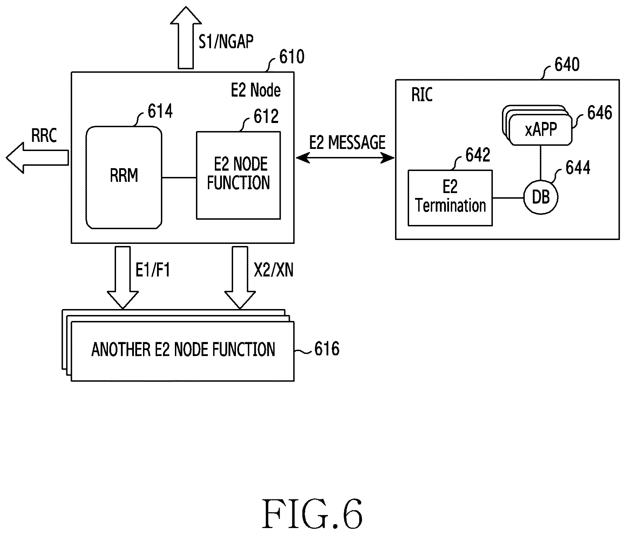

FIG. 6 illustrates a logical function related to an E2 node and an E2 message of an RIC in a radio access network according to various embodiments of the disclosure.

Referring to FIG. 6, an RIC 640 and an E2 node 610 may transmit or receive an E2 message to or from each other. For example, the E2 node 610 may be an O-CU-CP, an O-CU-UP, an O-DU, or a base station. A communication interface of the E2 node may be determined according to the type of the E2 node 610. For example, the E2 node 610 may perform communication with another E2 node 616 through an E1 interface or an F1 interface. Alternatively, for example, the E2 node 610 may perform communication with the E2 node 616 through an X2 interface or an XN interface. Alternatively, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 may be a function corresponding to a specific application S/W (xApp) 646 installed in the RIC 640. For example, in a case of KPI monitoring, a KPI monitor collection S/W may be installed in the RIC 540, and the E2 node 610 may include an E2 node function 612 of generating KPI parameters and then forwarding an E2 message including the KPI parameter to an E2 termination function 642 located in the RIC 640. The E2 node 610 may manage resources provided to a wireless network for a terminal.

The E2 termination function 642 located in the RIC 640 is a termination of the RIC 640 for the E2 message, and may perform a function of interpreting the E2 message forwarded by the E2 node 610 and then forwarding the same to the xApp 646. A database (DB) 644 located in the RIC 640 may be used for the E2 termination 624 or the xApp 616. The E2 node 610 illustrated in FIG. 6 is a termination of at least one interface, and may be understood as a termination of messages forwarded to a terminal, a neighbor base station, or a core network.

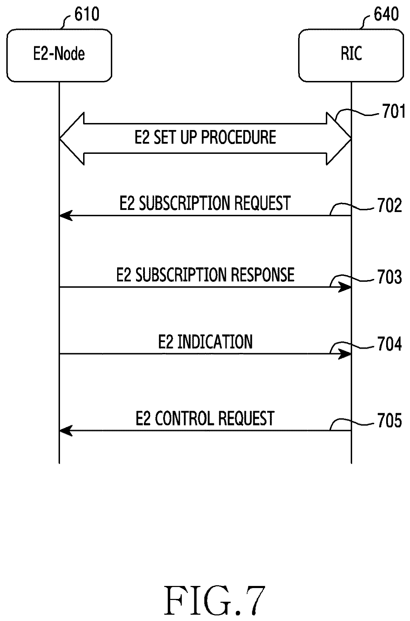

FIG. 7 illustrates a procedure for E2 RIC control between an E2 node and an IRC in a radio access network according to various embodiments of the disclosure.

Referring to FIG. 7, in operation 701, the E2 node 610 and the RIC 640 may perform an E2 setup procedure. An E2 node function positioned in the E2 node 610 may search for the RIC 640 by using an IP address of the RIC 6340 set up by OAM and then transmit an E2 setup request message to the RIC 640, so as to inform a call process function supported by the E2 node 610. In response to the request, the RIC 640 may transmit an E2 setup response message to the E2 node 610.

In operation 702, the RIC 640 may transmit an RIC subscription request message to the E2 node 610. In other words, specific xApp positioned in the RIC 640 may request subscription to a specific E2 RAN FUNCTION DEFINITION function supported by the E2 node from the RIC E2 termination function. Here, the E2 RAN FUNCTION DEFINITION may be an operator-specific service model (SM), and whether a service model is specified by an operator may be indicated using an RIC STYLE ID. Whether a service model is specified by an operator may be indicated by an IE other than the RIC STYLE ID. In another embodiment, an RIC subscription request message may be included in the E2 setup response message transmitted in operation 701. When the E2 node 640 supports the operator-specific service model, operator-specific subscription may be configured using an RIC event trigger definition.

In operation 703, the E2 node 610 may transmit an E2 subscription response message to the RIC 640. That is, the E2 node 610 may notify the RIC 640 of whether the operator-specific subscription is successful by transmitting the subscription response message.

In operation 704, the E2 node 610 may transmit an RIC indication to the RIC 640. For example, when an event satisfying an operator-specific event trigger condition configured by the subscription request message occurs, the E2 node function of the E2 node 610 may transmit an E2 RIC indication message to the RIC 640. The RIC indication may be a message container. In this case, the E2 indication message may be transmitted as an operator-specific message type. According to an embodiment, whether the message is specified by an operator may be indicated by an RIC INDICATION HEADER TYPE, RIC INDICATION MESSAGE TYPE, or an RIC STYLE ID.

In operation 705, the RIC 640 may transmit an E2 control request message to the E2 node 610. The RIC 640 may transmit the E2 control request message to the E2 node function to control an event generated in operation 704. In this case, the E2 control message may be transmitted as an operator-specific message type. According to an embodiment, whether the message is specified by an operator may be indicated by RIC CONTROL HEADER TYPE, RIC CONTROL MESSAGE TYPE, or RIC STYLE ID.

Hereinafter, a method for guaranteeing a service level agreement is described based on the above-described procedure of FIG. 7. More specifically, information transmitted and received between the RIC and the O-DU to guarantee the service level agreement according to various embodiments of the disclosure may be included in a message transmitted or received in each operation (e.g., operations 702 to 705) of FIG. 7. However, information for guaranteeing the service level agreement according to various embodiments of the disclosure is not limited to be included in the message transmitted or receive in each operation of FIG. 7 and transmitted and received, and may be included in the same or similar message and transmitted and received.

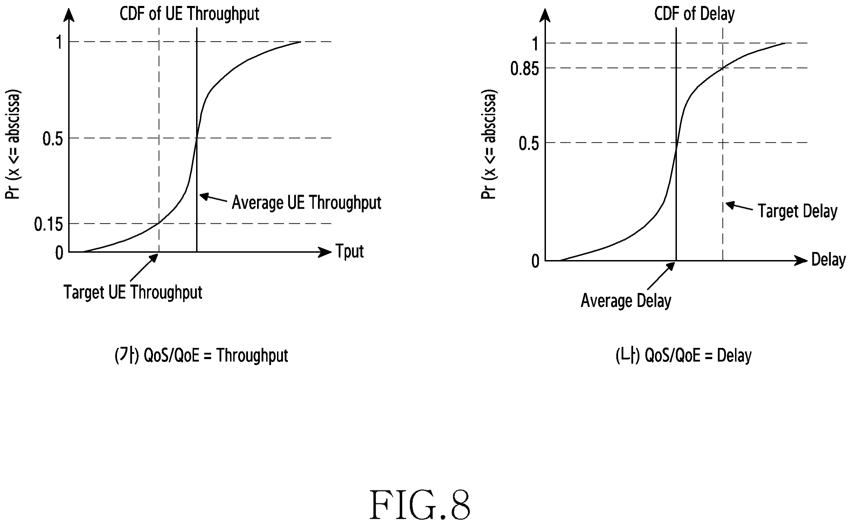

FIG. 8 illustrates a QoS/QoE for each UE according to various embodiments of the disclosure.

Referring to FIG. 8, part (a) is a graph illustrating a cumulative distribution function (CDF) when a QoS/QoE KPI is for throughput, and part (b) is a graph illustrating a CDF for each UE when a QoS/QoE KPI is for delay.

It may be practically difficult for an O-DU to manage a QoS/QoE KPI for each of all UEs. In addition, a wide E2 bandwidth may be required for the O-DU to report a QoS/QoE KPI of each UE to an RIC. However, it may be difficult for the RIC to accurately identify a satisfaction ratio of a service level agreement of a UE by using only an average QoS/QoE performance value for each UE collected from the O-DU. In addition, the RIC may have difficulty in controlling the O-DU to correspond to a service satisfaction ratio which may be differently required for each UE. Therefore, the RIC needs to control the O-DU, based on a violation ratio of QoS/QoE rather than an average QoS/QoE performance value of each UE. In addition, the RIC may be required to standardize a relevant information element (IE) and procedure in order to receive a QoS/QoE violation ratio value of each UE reported from the O-DU.

For example, an average UE throughput is higher than a target UE throughput (or a desired UE throughput) in part (a) of FIG. 8. In this case, the throughput violation ratio may have a value of 15%. In addition, an average delay value of the UE is smaller than a target delay value (or a desired delay value) in part (b) of FIG. 8. That is, it may indicate that the value of the average delay generated in actual communication with the UE is generated in a smaller range than that of the target delay value. Accordingly, the delay value violation ratio may have a value of 15%.

However, in part (a) or (b) of FIG. 8, it is not necessary to configure only one target UE throughput or target delay value in an x axis, multiple (or multi-level) target UE throughputs or target delay values may also be configured.

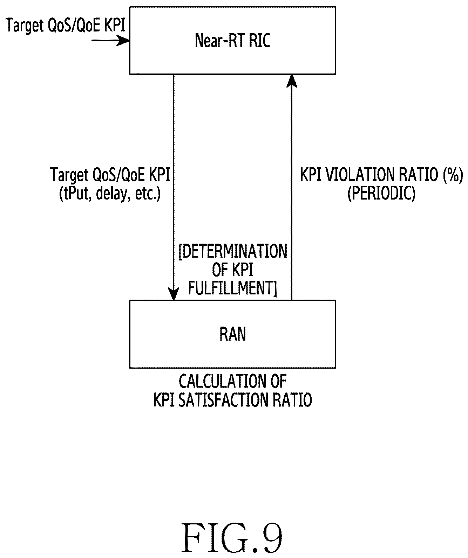

Referring to FIG. 9, an RIC needs to standardize a target QoS/QoE KPI designation scheme for a UE so as to efficiently control a RAN (e.g., O-DU). For example, the RIC may receive, from the O-DU, a report for a violation ratio of a service level agreement for each UE or UE group by standardizing a target QoS/QoE KPI. In addition, the RIC may standardize a target QoS/QoE KPI of a network slice or network slice group to which a particular UE belongs. The target QoS/QoE KPI may include at least one of throughput, delay, reliability, or MOS. Therefore, the RIC may configure the target QoS/QoE KPI in the O-DU. The O-DU may determine KPI fulfillment, based on a target QoS/QoE KPI configuration. In an embodiment, the O-DU may measure a value corresponding to the target QoS/QoE KPI. In an embodiment, the O-DU may also calculate a KPI satisfaction ratio (target QoS/QoE violation ratio or service level agreement violation ratio), based on the target QoS/QoE KPI measurement value.

The O-DU may transmit a message including a measurement value or a target QoS/QoE violation ratio to the RIC. The message including a target QoS/QoE violation ratio may further include an average QoS/QoE value of a UE or UE group, as well as the target QoS/QoE violation ratio. The message including a target QoS/QoE violation ratio may be periodically transmitted. However, the message including a target QoS/QoE violation ratio is not necessarily required to be periodically transmitted, and may be semi-persistently or dynamically transmitted according to a configuration made by the RIC.

As an embodiment, the RIC may receive, from the O-DU through an E2 interface in units of UE or UE groups, information on an entire time for which service is received during a monitoring time, and a service time for which a target QoS/QoE fails to be satisfied during the monitoring time. Alternatively, the RIC may receive, from the O-DU, a value of a ratio (i.e., a violation ratio related to a service reception time) of a service time for which a target QoS/QoE fails to be satisfied to an entire time for which service is received during a monitoring time. The monitoring time may be configured by the RIC and may be a monitor window for identifying (or searching for) a service reception time and a service time for which a target QoS/QoE fails to be satisfied.

As an embodiment, the RIC may receive, from the O-DU through an E2 interface in units of UE or UE groups, information on the number of all packets received during a monitoring time, and the number of packets failing to satisfy a target QoS/QoE during the monitoring time among the received packets. Alternatively, the RIC may receive, from the O-DU, a value of a ratio (i.e., a violation ratio related to the number of received packets) of the number of packets failing to satisfy a target QoS/QoE to the number of all packets received during a monitoring time. The monitoring time may be configured by the RIC and may be a monitor window for identifying (or searching for) the number of received packets and the number of packets failing to satisfy a target QoS/QoE among the received packets.

The above pieces of information received from the O-DU merely correspond to an example, and are not limited to the above example. In addition, the message received from the O-DU is not required to include only one piece of information among the illustrated pieces of information, and may include multiple pieces of information according to a configuration made by the RIC.

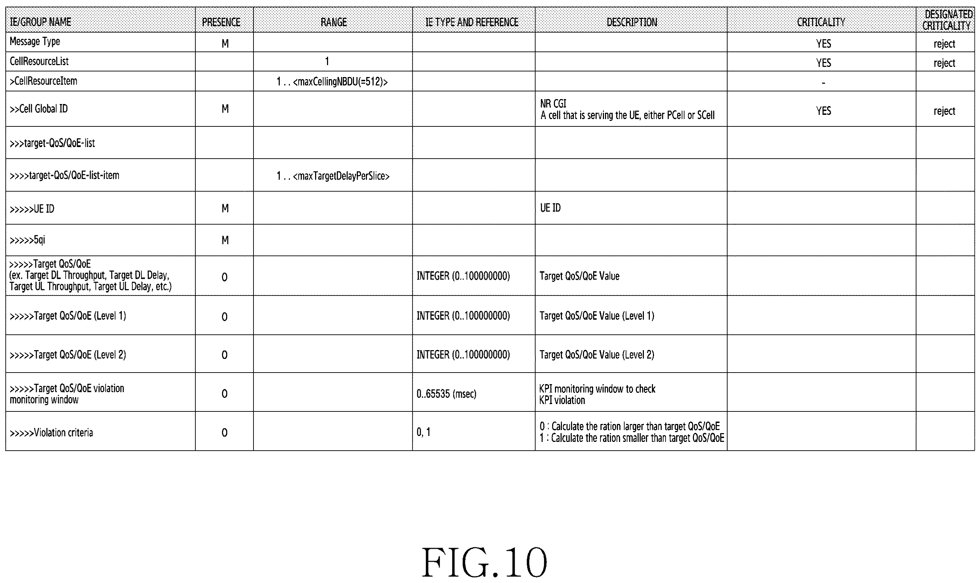

FIG. 10 illustrates a standardized interface for designating a target QoS/QoE value in units of UEs according to various embodiments of the disclosure.

Referring to FIG. 10, an RIC may configure (or transmit) a standardized interface used for an O-DU to report a target QoS/QoE KPI in units of UEs. For example, the standardized interface may be included in a subscription request message (e.g., operation 702 in FIG. 7) transmitted by the RIC to the O-DU. An IE included in the standardized interface may be as follows.

### Message Type.

Cell resource list (CellResourceList).
> Cell resource item (CellResourceItem).
>> Cell global identifier (cell global ID, CGI): This indicates an identifier of a serving cell including a PCell or SCell.
>>> Target QoS/QoE list (target-QoS/QoE-list-item): This ranges from 1 to a maximum target delay value per network slice.
>>>> Target QoS/QoE list item (target-QoS/QoE-list-item).
>>>>> UE identifier (UE-ID).
>>>>> 5G QoS identifier (5qi).
>>>>> Target QoS/QoE: For example, this corresponds to at least one of target DL throughput, target DL delay, target UL throughput, and target UL delay, and indicates a target QoS/QoE value.
>>>>> Target QoS/QoE of first level (Target QoS/QoE (Level 1)): When target QoS/QoEs of multiple levels are configured, this indicates a target QoS/QoE value of a first level.
>>>>> Target QoS/QoE of second level (Target QoS/QoE (Level 2)): When target QoS/QoEs of multiple levels are configured, this indicates a target QoS/QoE value of a second level.
>>>>> Target QoS/QoE violation monitoring window: A monitoring window for identifying (or detecting) whether a random KPI is violated.
>>>>> Violation criteria: This has a value of 0 or 1, if the value is 0, a calculated ratio is greater than a target QoS/QoE, and if the value is 1, this indicates that the calculated ratio is smaller than the target QoS/QoE. However, the criteria is not limited to the value of 0 or 1, and may take opposing values or other integer values different from 0 and 1. In addition, the violation criteria may be an IE used when the O-DU calculates a target QoS/QoE.

The IE included in the standardized interface used for designating a target QoS/QoE value in units of UEs is not limited to the above example. One or more IEs different from the above example may be added or at least one IE may be excluded from the above example.

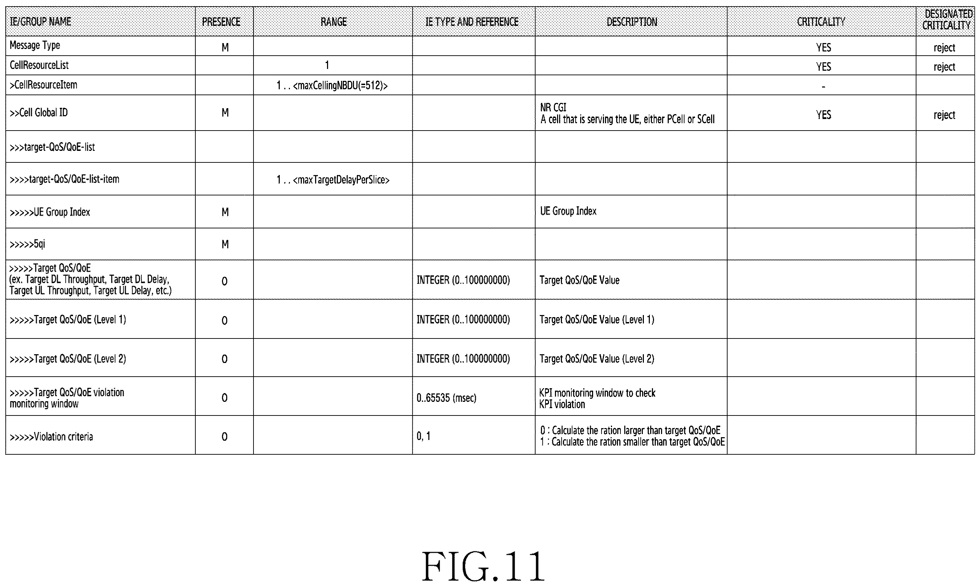

FIG. 11 illustrates a standardized interface for designating a target QoS/QoE value in units of UE groups according to various embodiments of the disclosure.

Referring to FIG. 11, an RIC may configure (or transmit) a standardized interface used for an O-DU to report a target QoS/QoE KPI in units of UE groups. For example, the standardized interface may be included in a subscription request message (e.g., operation 702 in FIG. 7) transmitted by the RIC to the O-DU. An IE included in the standardized interface may be as follows.

Message Type.

Cell resource list (CellResourceList).
> Cell resource item (CellResourceItem).
>> Cell global identifier (cell global ID, CGI): This indicates an identifier of a serving cell including a PCell or SCell.
>>> Target QoS/QoE list (target-QoS/QoE-list-item): This ranges from 1 to a maximum target delay value per network slice.
>>>> Target QoS/QoE list item (target-QoS/QoE-list-item).
>>>>> UE Group Index.
>>>>> 5G QoS identifier (5qi).
>>>>> Target QoS/QoE: For example, this corresponds to at least one of target DL throughput, target DL delay, target UL throughput, and target UL delay, and indicates a target QoS/QoE value.
>>>>> Target QoS/QoE of first level (Target QoS/QoE (Level 1)): When target QoS/QoEs of multiple levels are configured, this indicates a target QoS/QoE value of a first level.
>>>>> Target QoS/QoE of second level (Target QoS/QoE (Level 2)): When target QoS/QoEs of multiple levels are configured, this indicates a target QoS/QoE value of a second level.
>>>>> Target QoS/QoE violation monitoring window: A monitoring window for identifying (or detecting) whether a random KPI is violated.
>>>>> Violation criteria: This has a value of 0 or 1, if the value is 0, a calculated ratio is greater than a target QoS/QoE, and if the value is 1, this indicates that the calculated ratio is smaller than the target QoS/QoE. However, the criteria is not limited to the value of 0 or 1, and may take opposing values or other integer values different from 0 and 1. In addition, the violation criteria may be an IE used when the O-DU calculates a target QoS/QoE.

The IE included in the standardized interface used for designating a target QoS/QoE value in units of UE groups is not limited to the above example. One or more IEs different from the above example may be added or at least one IE may be excluded from the above example.

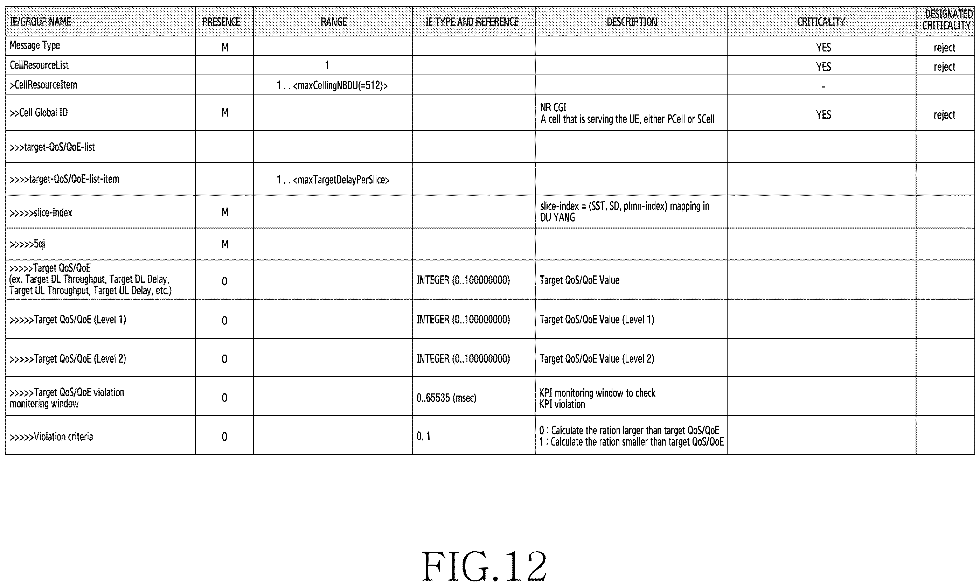

FIG. 12 illustrates a standardized interface for designating a target QoS/QoE KPI of a network slice to which a UE belongs according to various embodiments of the disclosure.

Referring to FIG. 12, an RIC may configure (or transmit) a standardized interface used for an O-DU to report a target QoS/QoE KPI of a network slice to which a UE belongs. For example, the standardized interface may be included in a subscription request message (e.g., operation 702 in FIG. 7) transmitted by the RIC to the O-DU. An IE included in the standardized interface may be as follows.

Message Type.

Cell resource list (CellResourceList).
> Cell resource item (CellResourceItem).
>> Cell global identifier (cell global ID, CGI): This indicates an identifier of a serving cell including a PCell or SCell.
>>> Target QoS/QoE list (target-QoS/QoE-list-item): This ranges from 1 to a maximum target delay value per network slice.
>>>> Target QoS/QoE list item (target-QoS/QoE-list-item).
>>>>> Slice index (slice-index): A slice index is at least one of slice/service type (SST), slice differentiator (SD), or public land mobile network (PLMN) index mapped to DU YANG.
>>>>> 5G QoS identifier (5qi).
>>>>> Target QoS/QoE: For example, this corresponds to at least one of target DL throughput, target DL delay, target UL throughput, and target UL delay, and indicates a target QoS/QoE value.
>>>>> Target QoS/QoE of first level (Target QoS/QoE (Level 1)): When target QoS/QoEs of multiple levels are configured, this indicates a target QoS/QoE value of a first level.
>>>>> Target QoS/QoE of second level (Target QoS/QoE (Level 2)): When target QoS/QoEs of multiple levels are configured, this indicates a target QoS/QoE value of a second level.
>>>>> Target QoS/QoE violation monitoring window: A monitoring window for identifying (or detecting) whether a random KPI is violated.
>>>>> Violation criteria: This has a value of 0 or 1, if the value is 0, a calculated ratio is greater than a target QoS/QoE, and if the value is 1, this indicates that the calculated ratio is smaller than the target QoS/QoE. However, the criteria is not limited to the value of 0 or 1, and may take opposing values or other integer values different from 0 and 1. In addition, the violation criteria may be an IE used when the O-DU calculates a target QoS/QoE.

The IE included in the standardized interface used for designating a target QoS/QoE value of a network slice to which a UE belongs is not limited to the above example. One or more IEs different from the above example may be added or at least one IE may be excluded from the above example.

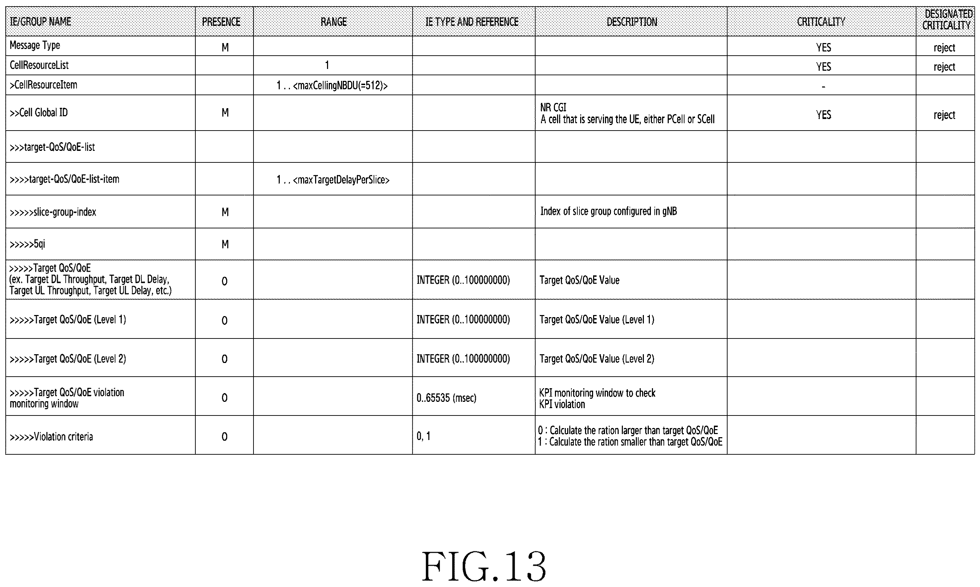

FIG. 13 illustrates a standardized interface for designating a target QoS/QoE value of a network slice group to which a UE belongs according to various embodiments of the disclosure.

Referring to FIG. 13, an RIC may configure (or transmit) a standardized interface used for an O-DU to report a target QoS/QoE KPI of a network slice group to which a UE belongs. For example, the standardized interface may be included in a subscription request message (e.g., operation 702 in FIG. 7) transmitted by the RIC to the O-DU. An IE included in the standardized interface may be as follows.

Message Type.

Cell resource list (CellResourceList).
> Cell resource item (CellResourceItem).
>> Cell global identifier (cell global ID, CGI): This indicates an identifier of a serving cell including a PCell or SCell.
>>> Target QoS/QoE list (target-QoS/QoE-list-item): This ranges from 1 to a maximum target delay value per network slice.
>>>> Target QoS/QoE list item (target-QoS/QoE-list-item).
>>>>> Slice group index (slice-group-index): An index of a network slice group configured by a base station (e.g., gNB).
>>>>> 5G QoS identifier (5qi).
>>>>> Target QoS/QoE: For example, this corresponds to at least one of target DL throughput, target DL delay, target UL throughput, and target UL delay, and indicates a target QoS/QoE value.
>>>>> Target QoS/QoE of first level (Target QoS/QoE (Level 1)): When target QoS/QoEs of multiple levels are configured, this indicates a target QoS/QoE value of a first level.
>>>>> Target QoS/QoE of second level (Target QoS/QoE (Level 2)): When target QoS/QoEs of multiple levels are configured, this indicates a target QoS/QoE value of a second level.
>>>>> Target QoS/QoE violation monitoring window: A monitoring window for identifying (or detecting) whether a random KPI is violated.
>>>>> Violation criteria: This has a value of 0 or 1, if the value is 0, a calculated ratio is greater than a target QoS/QoE, and if the value is 1, this indicates that the calculated ratio is smaller than the target QoS/QoE. However, the criteria is not limited to the value of 0 or 1, and may take opposing values or other integer values different from 0 and 1. In addition, the violation criteria may be an IE used when the O-DU calculates a target QoS/QoE.

The IE included in the standardized interface used for designating a target QoS/QoE value in a unit of a network slice group to which a UE belongs is not limited to the above example. One or more IEs different from the above example may be added or at least one IE may be excluded from the above example.

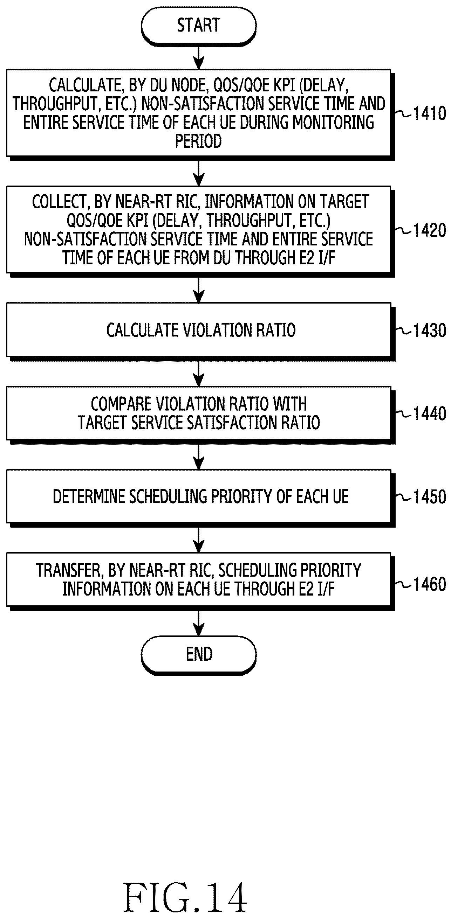

FIG. 14 illustrates a sequence of a control procedure for an O-DU, based on a target QoS/QoE violation ratio of each UE according to various embodiments of the disclosure.

Referring to FIG. 14, in a case where a standardized interface for reporting a target QoS/QoE KPI in units of UEs is configured in an O-DU according to FIG. 10 described above, a procedure in which an RIC receives service time information related to a target QoS/QoE from the O-DU and controls the O-DU, based on the received information may be described. In this case, in FIG. 14 and in the following description of the disclosure, a DU may refer to an O-DU as described above, and an O-DU may be used together with a DU.

In operation 1410, an O-DU may calculate a QoS/QoE KPI of each UE in a monitoring window. As an embodiment, the O-DU may calculate (or identify) a time for which service is received during a monitoring period and a service time for which a target QoS/QoE fails to be satisfied. As an embodiment, the O-DU may calculate (or identify) an entire service reception time and a service time for which a target QoS/QoE is satisfied.

In operation 1420, the RIC may receive, from the O-DU through an E2 interface, information on the entire service reception time and the service time for which the target QoS/QoE fails to be satisfied, which are calculated by the O-DU. As an embodiment, the information on the entire service time and the service time for which the target QoS/QoE fails to be satisfied, which are calculated by the O-DU, may be included in the indication message of operation 704 in FIG. 7 described above and be transmitted.

In operation 1430, as an embodiment, the RIC may calculate a target QoS/QoE violation ratio of each UE, based on the information on the entire service time and the service time for which the target QoS/QoE fails to be satisfied, which is received from the O-DU. As an embodiment, the RIC may calculate a target QoS/QoE satisfaction ratio of each UE, based on the information on the entire service time and the service time for which the target QoS/QoE is satisfied, which is received from the O-DU.

In operation 1440, the RIC may compare the calculated target QoS/QoE violation ratio with a targeted service satisfaction ratio (e.g., a service level agreement). Therefore, the RIC may identify a service level provided to each UE.

In operation 1450, the RIC may determine (or decide) a scheduling priority of each UE, based on the service level of each UE identified in operation 1440. For example, the RIC may preferentially schedule a UE having a determined service level not reaching a service level agreement, compared to a UE satisfying a service level agreement. However, determining a scheduling priority, based on only a satisfaction ratio of a service level agreement of each UE merely corresponds to an example, and the scheduling priority may be determined by the satisfaction ratio of the service level agreement and other factors.

In operation 1460, the RIC may transfer (or transmit) scheduling priority information on each UE to the O-DU through the E2 interface. The scheduling priority information on each UE may be included in the control request message of operation 705 in FIG. 7 described above and transmitted.

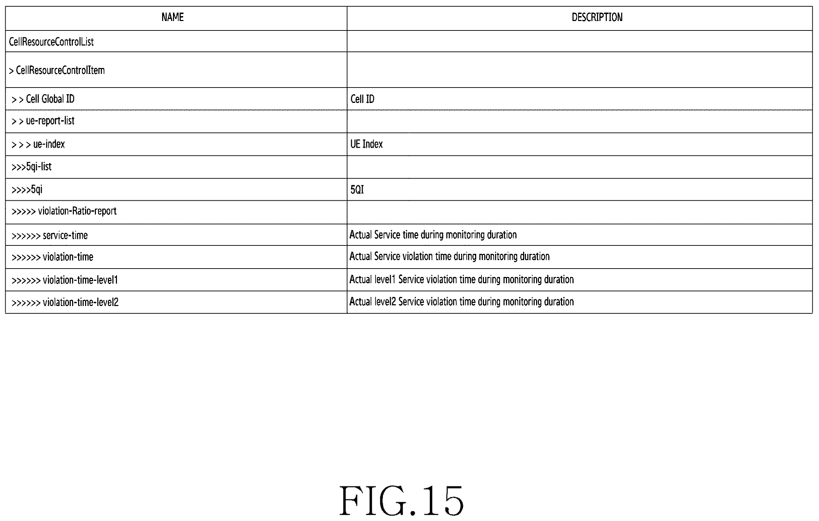

FIG. 15 illustrates target QoS/QoE-related information on each UE reported by an O-DU according to various embodiments of the disclosure.

Referring to FIG. 15, the pieces of information included in the message transmitted by the O-DU to the RIC in operation 1420 of FIG. 14 described above may be described. As an embodiment, the message transmitted by the O-DU to the RIC may include information on an entire service reception time and a service time for which a target QoS/QoE fails to be satisfied, which are calculated by the O-DU. As an embodiment, the message transmitted by the O-DU to the RIC may include information on an entire service reception time and a service time for which a target QoS/QoE is satisfied, which are calculated by the O-DU.

More specifically, the information included in the message transmitted by the O-DU to the RIC may include at least one of the following IEs.

Cell resource control list (CellResourceControlList).
> Cell resource control item (CellResourceControlltem).
>> Cell global identifier (Cell Global ID).
>> UE report list (ue-report-list).
>>> UE index (ue-index).
>>> 5qi list (5qi-list).
>>>>5qi.
>>>>> Violation ratio report (violation-Ratio-report).
>>>>>> Total service reception time (service-time): An entire time for which a corresponding UE receives service.
>>>>>> Service time for which target QoS/QoE fails to be satisfied (violation-time): A service time for which a target QoS/QoE fails to be satisfied for a corresponding UE.
>>>>>> Service time for which target QoS/QoE of first level fails to be satisfied (violation-time-level1): A service time for which a target QoS/QoE of a first level fails to be satisfied for a corresponding UE.
>>>>>> Service time for which target QoS/QoE of second level fails to be satisfied (violation-time-level2): A service time for which a target QoS/QoE of a second level fails to be satisfied for a corresponding UE.

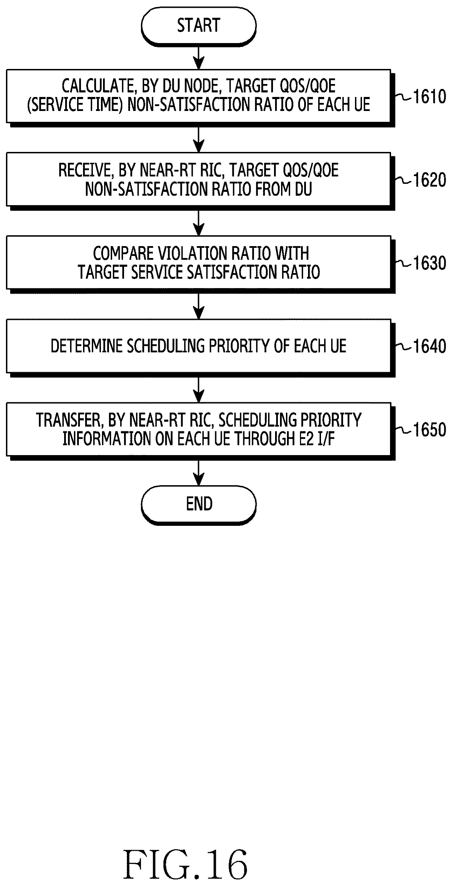

FIG. 16 illustrates a sequence of a control procedure for an O-DU, based on a target QoS/QoE violation ratio of each UE according to various embodiments of the disclosure.

Referring to FIG. 16, in a case where a standardized interface for reporting a target QoS/QoE KPI of each UE is configured in an O-DU according to FIG. 10 described above, a procedure in which an RIC receives target QoS/QoE violation ratio information from the O-DU and controls the O-DU, based on the received information may be described.

In operation 1610, an O-DU may calculate a QoS/QoE KPI of each UE in a monitoring window. As an embodiment, the O-DU may calculate (or identify) an entire service time and a service time for which a target QoS/QoE fails to be satisfied. In addition, the RIC may calculate a ratio (i.e., a target QoS/QoE violation ratio) of the service time for which the target QoS/QoE fails to be satisfied to the entire service time.

In operation 1620, the RIC may receive, from the O-DU through an E2 interface, target QoS/QoE violation ratio information calculated by the O-DU. As an embodiment, the target QoS/QoE violation ratio information calculated by the O-DU may be included in the indication message of operation 704 in FIG. 7 described above and be transmitted.

In operation 1630, the RIC may compare the calculated target QoS/QoE violation ratio with a targeted service satisfaction ratio (e.g., a service level agreement). Therefore, the RIC may identify a service level provided to each UE.

In operation 1640, the RIC may determine (or decide) a scheduling priority of each UE, based on the service level of each UE identified in operation 1630. For example, the RIC may preferentially schedule a UE having a determined service level not reaching a service level agreement, compared to a UE satisfying a service level agreement. However, determining a scheduling priority, based on only a satisfaction ratio of a service level agreement of each UE merely corresponds to an example, and the scheduling priority may be determined by the degree of the service level agreement and other factors.

In operation 1650, the RIC may transfer (or transmit) scheduling priority information on each UE to the O-DU through the E2 interface. The scheduling priority information on each UE may be included in the control request message of operation 705 in FIG. 7 described above and transmitted.

The subject that performs an operation (e.g., operation 1430 and operation 1610) of calculating a target QoS/QoE violation ratio, based on an entire service time and a service time for which a target QoS/QoE fails to be satisfied in FIG. 14 and FIG. 16 described above may be determined in consideration of at least one of the computational capability of the O-DU, the amount of power, or the signaling overhead between the RIC and the O-DU. For example, when the computational capability of the O-DU is insufficient or the available amount of power is low, the operation of calculating a target QoS/QoE violation ratio may be performed by the RIC (e.g., operation 1430). Alternatively, when the computational capability of the O-DU is sufficient and the available amount of power is enough, the operation of calculating a target QoS/QoE violation ratio may be performed by the O-DU (e.g., operation 1610).

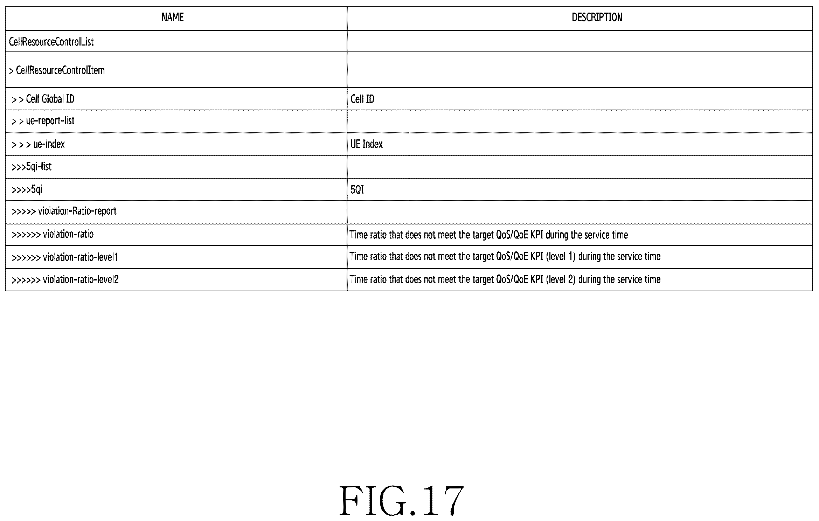

FIG. 17 illustrates target QoS/QoE-related information on each UE reported by an O-DU according to various embodiments of the disclosure.

Referring to FIG. 17, the pieces of information included in the message transmitted by the O-DU to the RIC in operation 1620 of FIG. 16 described above may be described. As an embodiment, the message transmitted by the O-DU to the RIC may include target QoS/QoE violation ratio information calculated by the O-DU.

More specifically, the information included in the message transmitted by the O-DU to the RIC may include at least one of the following IEs.

Cell resource control list (CellResourceControlList).
> Cell resource control item (CellResourceControlltem).
>> Cell global identifier (Cell Global ID).
>> UE report list (ue-report-list).
>>> UE index (ue-index).
>>> 5qi list (5qi-list).
>>>>5qi.
>>>>> Violation ratio report (violation-Ratio-report).
>>>>>> Violation ratio (violation-ratio): A ratio of a service time for which a target QoS/QoE fails to be satisfied for a corresponding UE during a monitoring period.
>>>>>> Violation ratio of first level (violation-ratio-levell): A ratio of a service time for which a target QoS/QoE of a first level fails to be satisfied for a corresponding UE during a monitoring period.
>>>>>> Violation ratio of second level (violation-ratio-level2): A ratio of a service time for which a target QoS/QoE of a second level fails to be satisfied for a corresponding UE during a monitoring period.

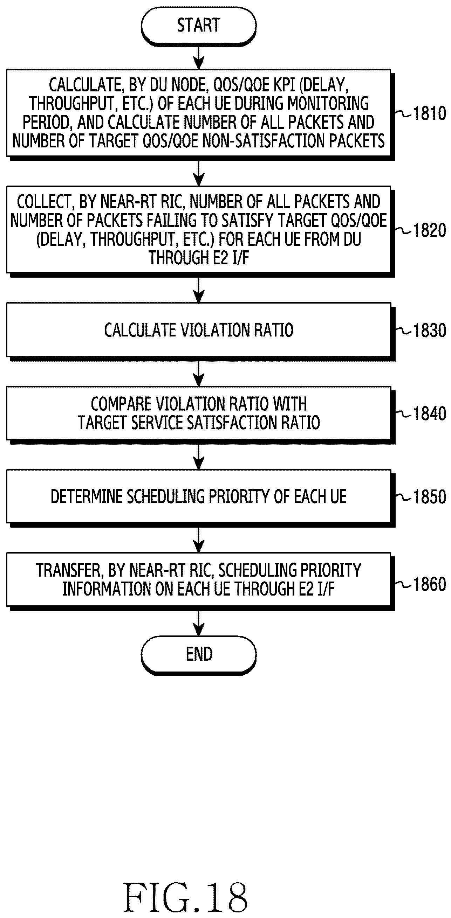

FIG. 18 illustrates a sequence of a control procedure for an O-DU, based on a target QoS/QoE violation ratio of each UE according to various embodiments of the disclosure.

Referring to FIG. 18, in a case where a standardized interface for reporting a target QoS/QoE KPI in units of UEs is configured in an O-DU according to FIG. 10 described above, a procedure in which an RIC receives packet count information related to a target QoS/QoE from the O-DU and controls the O-DU, based on the received information may be described.

In operation 1810, an O-DU may calculate a QoS/QoE KPI of each UE in a monitoring window. As an embodiment, the O-DU may calculate (or identify) the number of all packets received during a monitoring period and the number of packets failing to satisfy a target QoS/QoE. As an embodiment, the O-DU may calculate (or identify) the number of all received packets and the number of packets satisfying a target QoS/QoE.

In operation 1820, the RIC may receive, from the O-DU through an E2 interface, information on the number of all the packets and the number of packets failing to satisfy the target QoS/QoE, which are calculated by the O-DU. As an embodiment, the information on the number of all the packets and the number of packets failing to satisfy the target QoS/QoE, which are calculated by the O-DU, which are calculated by the O-DU, may be included in the indication message of operation 704 in FIG. 7 described above and be transmitted.

In operation 1830, as an embodiment, the RIC may calculate a target QoS/QoE violation ratio of each UE, based on the information on the number of all the packets and the number of packets failing to satisfy the target QoS/QoE, which is received from the O-DU. As an embodiment, the RIC may calculate a target QoS/QoE satisfaction ratio of each UE, based on the information on the number of all the packets and the number of packets satisfying the target QoS/QoE, which is received from the O-DU.

In operation 1840, the RIC may compare the calculated target QoS/QoE violation ratio with a targeted service satisfaction ratio (e.g., a service level agreement). Therefore, the RIC may identify a service level provided to each UE.

In operation 1850, the RIC may determine (or decide) a scheduling priority of each UE, based on the service level of each UE identified in operation 1840. For example, the RIC may preferentially schedule a UE having a determined service level not reaching a service level agreement, compared to a UE satisfying a service level agreement. However, determining a scheduling priority, based on only a satisfaction ratio of a service level agreement of each UE merely corresponds to an example, and the scheduling priority may be determined by the satisfaction ratio of the service level agreement and other factors.

In operation 1860, the RIC may transfer (or transmit) scheduling priority information on each UE to the O-DU through the E2 interface. The scheduling priority information on each UE may be included in the control request message of operation 705 in FIG. 7 described above and transmitted.

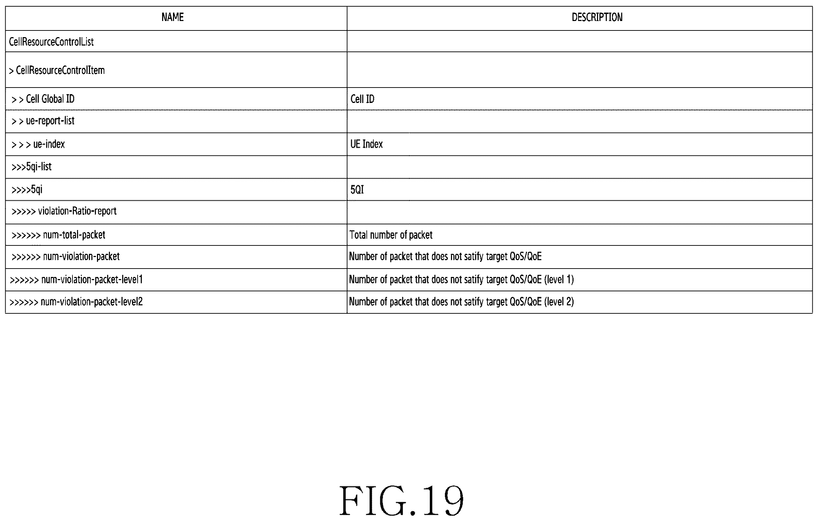

FIG. 19 illustrates target QoS/QoE-related information on each UE reported by an O-DU according to various embodiments of the disclosure.

Referring to FIG. 19, the pieces of information included in the message transmitted by the O-DU to the RIC in operation 1820 of FIG. 18 described above may be described. As an embodiment, the message transmitted by the O-DU to the RIC may include information on the number of all packets and the number of packets failing to satisfy a target QoS/QoE, which are calculated by the O-DU. As an embodiment, the message transmitted by the O-DU to the RIC may include information on the number of all packets and the number of packets satisfying a target QoS/QoE, which are calculated by the O-DU.

More specifically, the information included in the message transmitted by the O-DU to the RIC may include at least one of the following IEs.

Cell resource control list (CellResourceControlList).
> Cell resource control item (CellResourceControlItem).
>> Cell global identifier (Cell Global ID).
>> UE report list (ue-report-list).
>>> UE index (ue-index).
>>> 5qi list (5qi-list).
>>>>5qi.
>>>>> Violation ratio report (violation-Ratio-report).
>>>>>> Total number of received packets (num-total-packet): The number of all the packets received by a corresponding UE.
>>>>>> Number of packets failing to satisfy target QoS/QoE (num-violation-packet): The number of packets failing to satisfy a target QoS/QoE for a corresponding UE.
>>>>>> Number of packets failing to satisfy target QoS/QoE of first level (num-violation-packet-level1): The number of packets failing to satisfy a target QoS/QoE of a first level for a corresponding UE.
>>>>>> Number of packets failing to satisfy target QoS/QoE of second level (num-violation-packet-level2): The number of packets failing to satisfy a target QoS/QoE of a second level for a corresponding UE.

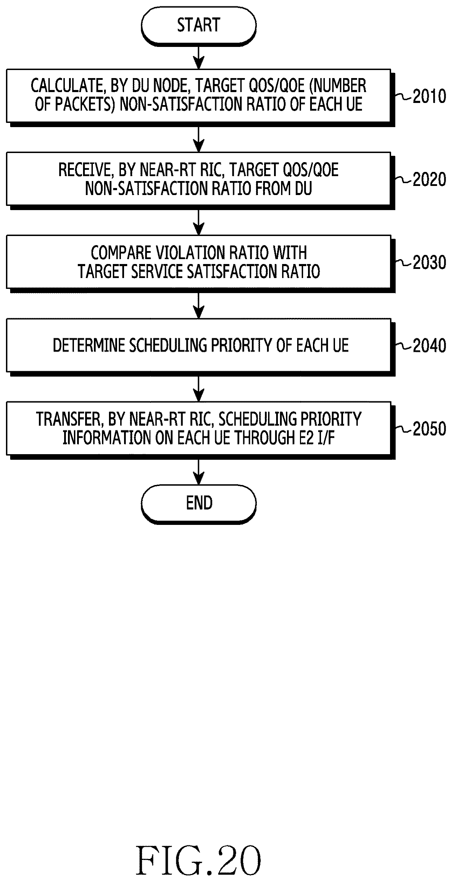

FIG. 20 illustrates a sequence of a control procedure for an O-DU, based on a target QoS/QoE violation ratio of each UE according to various embodiments of the disclosure.

Referring to FIG. 20, in a case where a standardized interface for reporting a target QoS/QoE KPI of each UE is configured in an O-DU according to FIG. 10 described above, a procedure in which an RIC receives target QoS/QoE violation ratio information from the O-DU and controls the O-DU, based on the received information may be described.

In operation 2010, an O-DU may calculate a QoS/QoE KPI of each UE in a monitoring window. As an embodiment, the O-DU may calculate (or identify) the number of all packets and the number of packets failing to satisfy a target QoS/QoE. In addition, the RIC may calculate a ratio (i.e., a target QoS/QoE violation ratio) of the number of the packets failing to satisfy the target QoS/QoE to the number of all the packets.

In operation 2020, the RIC may receive, from the O-DU through an E2 interface, target QoS/QoE violation ratio information calculated by the O-DU. As an embodiment, the target QoS/QoE violation ratio information calculated by the O-DU may be included in the indication message of operation 704 in FIG. 7 described above and be transmitted.

In operation 2030, the RIC may compare the calculated target QoS/QoE violation ratio with a targeted service satisfaction ratio (e.g., a service level agreement). Therefore, the RIC may identify a service level provided to each UE.

In operation 2040, the RIC may determine (or decide) a scheduling priority of each UE, based on the service level of each UE identified in operation 2030. For example, the RIC may preferentially schedule a UE having a determined service level not reaching a service level agreement, compared to a UE satisfying a service level agreement. However, determining a scheduling priority, based on only a satisfaction ratio of a service level agreement of each UE merely corresponds to an example, and the scheduling priority may be determined by the degree of the service level agreement and other factors.

In operation 2050, the RIC may transfer (or transmit) scheduling priority information on each UE to the O-DU through the E2 interface. The scheduling priority information on each UE may be included in the control request message of operation 705 in FIG. 7 described above and transmitted.

The subject that performs an operation (e.g., operation 1830 and operation 2010) of calculating a target QoS/QoE violation ratio, based on the number of all packets and the number of packets failing to satisfy a target QoS/QoE in FIG. 18 and FIG. 20 described above may be determined in consideration of at least one of the computational capability of the O-DU, the amount of power, or the signaling overhead between the RIC and the O-DU. For example, when the computational capability of the O-DU is insufficient or the available amount of power is low, the operation of calculating a target QoS/QoE violation ratio may be performed by the RIC (e.g., operation 1830). Alternatively, when the computational capability of the O-DU is sufficient and the available amount of power is enough, the operation of calculating a target QoS/QoE violation ratio may be performed by the O-DU (e.g., operation 2010).

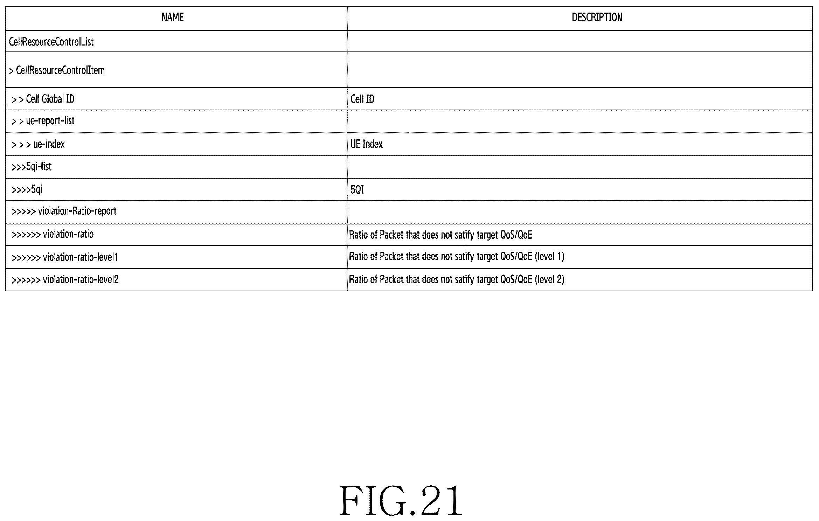

FIG. 21 illustrates target QoS/QoE-related information on each UE reported by an O-DU according to various embodiments of the disclosure.

Referring to FIG. 21, the pieces of information included in the message transmitted by the O-DU to the RIC in operation 2020 of FIG. 20 described above may be described. As an embodiment, the message transmitted by the O-DU to the RIC may include target QoS/QoE violation ratio information calculated by the O-DU.

More specifically, the information included in the message transmitted by the O-DU to the RIC may include at least one of the following IEs.

Cell resource control list (CellResourceControlList).
> Cell resource control item (CellResourceControlItem).
>> Cell global identifier (Cell Global ID).
>> UE report list (ue-report-list).
>>> UE index (ue-index).
>>> 5qi list (5qi-list).
>>>>5qi.
>>>>> Violation ratio report (violation-Ratio-report).
>>>>>> Violation ratio (violation-ratio): A ratio of the number of packets failing to satisfy a target QoS/QoE for a corresponding UE during a monitoring period.
>>>>>> Violation ratio of first level (violation-ratio-levell): A ratio of the number of packets failing to satisfy a target QoS/QoE of a first level for a corresponding UE during a monitoring period.
>>>>>> Violation ratio of second level (violation-ratio-level2): A ratio of the number of packets failing to satisfy a target QoS/QoE of a second level for a corresponding UE during a monitoring period.

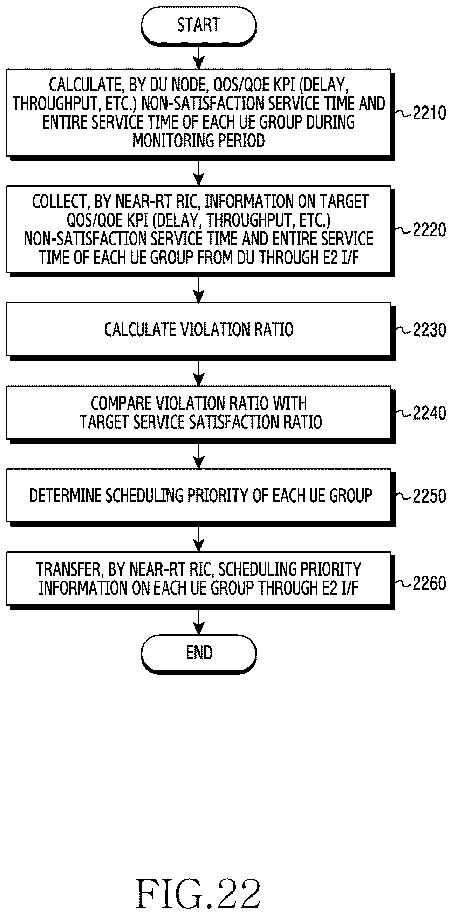

FIG. 22 illustrates a sequence of a control procedure for an O-DU, based on a target QoS/QoE violation ratio of each UE group according to various embodiments of the disclosure.

Referring to FIG. 22, in a case where a standardized interface for reporting a target QoS/QoE KPI of a UE group is configured in an O-DU according to FIG. 11 described above, a procedure in which an RIC receives service time information related to a target QoS/QoE from the O-DU and controls the O-DU, based on the received information may be described. In this case, in FIG. 22 and in the following description of the disclosure, a DU may refer to an O-DU as described above, and an O-DU may be used together with a DU.

In operation 2210, an O-DU may calculate a QoS/QoE KPI of each UE group in a monitoring window. As an embodiment, the O-DU may calculate (or identify) a time for which service is received during a monitoring period and a service time for which a target QoS/QoE fails to be satisfied. As an embodiment, the O-DU may calculate (or identify) an entire service reception time and a service time for which a target QoS/QoE is satisfied.

In operation 2220, the RIC may receive, from the O-DU through an E2 interface, information on the entire service reception time and the service time for which the target QoS/QoE fails to be satisfied, which are calculated by the O-DU. As an embodiment, the information on the entire service time and the service time for which the target QoS/QoE fails to be satisfied, which are calculated by the O-DU, may be included in the indication message of operation 704 in FIG. 7 described above and be transmitted.

In operation 2230, as an embodiment, the RIC may calculate a target QoS/QoE violation ratio of each UE group, based on the information on the entire service time and the service time for which the target QoS/QoE fails to be satisfied, which is received from the O-DU. As an embodiment, the RIC may calculate a target QoS/QoE satisfaction ratio of each UE group, based on the information on the entire service time and the service time for which the target QoS/QoE is satisfied, which is received from the O-DU.

In operation 2240, the RIC may compare the calculated target QoS/QoE violation ratio with a targeted service satisfaction ratio (e.g., a service level agreement). Therefore, the RIC may identify a service level provided to each UE group.

In operation 2250, the RIC may determine (or decide) a scheduling priority of each UE group, based on the service level of each UE group identified in operation 2240. For example, the RIC may preferentially schedule a UE group having a determined service level not reaching a service level agreement, compared to a UE group satisfying a service level agreement. However, determining a scheduling priority, based on only a satisfaction ratio of a service level agreement of each UE group merely corresponds to an example, and the scheduling priority may be determined by the satisfaction ratio of the service level agreement and other factors.

In operation 2260, the RIC may transfer (or transmit) scheduling priority information on each UE group to the O-DU through the E2 interface. The scheduling priority information on each UE group may be included in the control request message of operation 705 in FIG. 7 described above and transmitted.

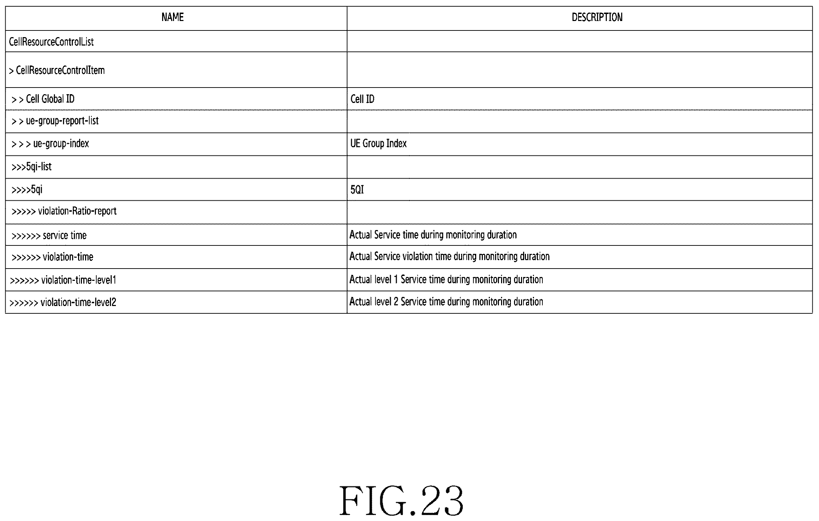

FIG. 23 illustrates target QoS/QoE-related information on each UE group reported by an O-DU according to various embodiments of the disclosure.

Referring to FIG. 23, the pieces of information included in the message transmitted by the O-DU to the RIC in operation 2220 of FIG. 22 described above may be described. As an embodiment, the message transmitted by the O-DU to the RIC may include information on an entire service reception time and a service time for which a target QoS/QoE fails to be satisfied, which are calculated by the O-DU. As an embodiment, the message transmitted by the O-DU to the RIC may include information on an entire service reception time and a service time for which a target QoS/QoE is satisfied, which are calculated by the O-DU.

More specifically, the information included in the message transmitted by the O-DU to the RIC may include at least one of the following IEs.

Cell resource control list (CellResourceControlList).
> Cell resource control item (CellResourceControlItem).
>> Cell global identifier (Cell Global ID).
>> UE group report list (ue-group-report-list).
>>> UE group index (ue-group-index).
>>> 5qi list (5qi-list).
>>>>5qi.
>>>>> Violation ratio report (violation-Ratio-report).
>>>>>> Total service reception time (service-time): An entire time for which a corresponding UE group receives service.
>>>>>> Service time for which target QoS/QoE fails to be satisfied (violation-time): A service time for which a target QoS/QoE fails to be satisfied for a corresponding UE group.
>>>>>> Service time for which target QoS/QoE of first level fails to be satisfied (violation-time-level1): A service time for which a target QoS/QoE of a first level fails to be satisfied for a corresponding UE group.
>>>>>> Service time for which target QoS/QoE of second level fails to be satisfied (violation-time-level2): A service time for which a target QoS/QoE of a second level fails to be satisfied for a corresponding UE group.

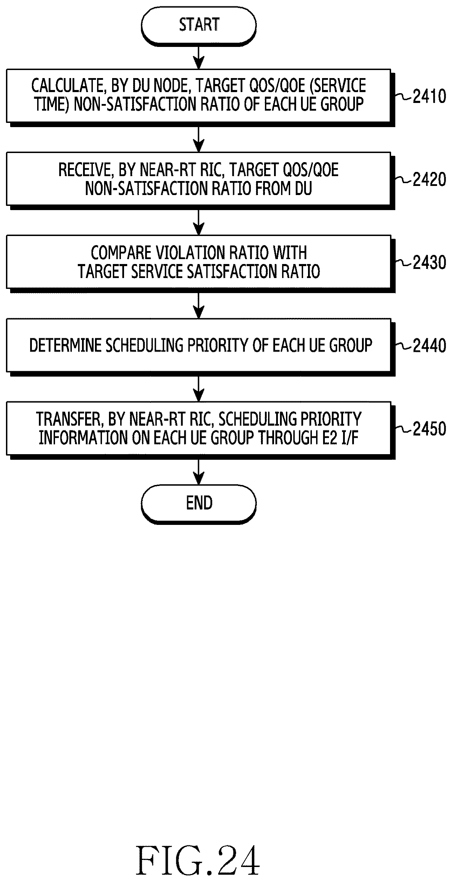

FIG. 24 illustrates a sequence of a control procedure for an O-DU, based on a target QoS/QoE violation ratio of each UE group according to various embodiments of the disclosure.

Referring to FIG. 24, in a case where a standardized interface for reporting a target QoS/QoE KPI of each UE group is configured in an O-DU according to FIG. 11 described above, a procedure in which an RIC receives target QoS/QoE violation ratio information from the O-DU and controls the O-DU, based on the received information may be described.

In operation 2410, an O-DU may calculate a QoS/QoE KPI of each UE group in a monitoring window. As an embodiment, the O-DU may calculate (or identify) an entire service time and a service time for which a target QoS/QoE fails to be satisfied. In addition, the RIC may calculate a ratio (i.e., a target QoS/QoE violation ratio) of the service time for which the target QoS/QoE fails to be satisfied to the entire service time.

In operation 2420, the RIC may receive, from the O-DU through an E2 interface, target QoS/QoE violation ratio information calculated by the O-DU. As an embodiment, the target QoS/QoE violation ratio information calculated by the O-DU may be included in the indication message of operation 704 in FIG. 7 described above and be transmitted.

In operation 2430, the RIC may compare the calculated target QoS/QoE violation ratio with a targeted service satisfaction ratio (e.g., a service level agreement). Therefore, the RIC may identify a service level provided to each UE group.

In operation 2440, the RIC may determine (or decide) a scheduling priority of each UE group, based on the service level of each UE group identified in operation 2430. For example, the RIC may preferentially schedule a UE group having a determined service level not reaching a service level agreement, compared to a UE group satisfying a service level agreement. However, determining a scheduling priority, based on only a satisfaction ratio of a service level agreement of each UE group merely corresponds to an example, and the scheduling priority may be determined by the degree of the service level agreement and other factors.

In operation 2450, the RIC may transfer (or transmit) scheduling priority information on each UE group to the O-DU through the E2 interface. The scheduling priority information on each UE group may be included in the control request message of operation 705 in FIG. 7 described above and transmitted.

The subject that performs an operation (e.g., operation 2230 and operation 2410) of calculating a target QoS/QoE violation ratio, based on an entire service time and a service time for which a target QoS/QoE fails to be satisfied in FIG. 22 and FIG. 24 described above may be determined in consideration of at least one of the computational capability of the O-DU, the amount of power, or the signaling overhead between the RIC and the O-DU. For example, when the computational capability of the O-DU is insufficient or the available amount of power is low, the operation of calculating a target QoS/QoE violation ratio may be performed by the RIC (e.g., operation 2230). Alternatively, when the computational capability of the O-DU is sufficient and the available amount of power is enough, the operation of calculating a target QoS/QoE violation ratio may be performed by the O-DU (e.g., operation 2410).

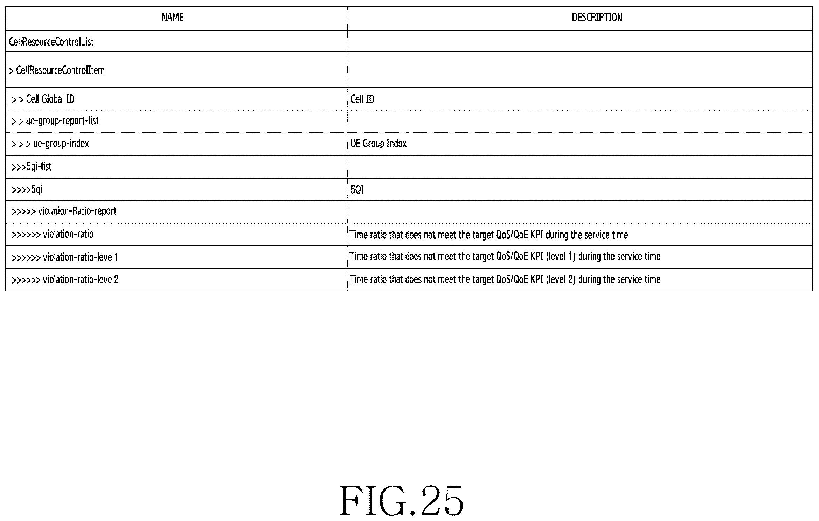

FIG. 25 illustrates target QoS/QoE-related information on each UE group reported by an O-DU according to various embodiments of the disclosure.

Referring to FIG. 25, the pieces of information included in the message transmitted by the O-DU to the RIC in operation 2420 of FIG. 24 described above may be described. As an embodiment, the message transmitted by the O-DU to the RIC may include target QoS/QoE violation ratio information calculated by the O-DU.

More specifically, the information included in the message transmitted by the O-DU to the RIC may include at least one of the following IEs.

Cell resource control list (CellResourceControlList).
> Cell resource control item (CellResourceControlItem).
>> Cell global identifier (Cell Global ID).
>> UE group report list (ue-group-report-list).
>>> UE group index (ue-group-index).
>>> 5qi list (5qi-list).
>>>>5qi.
>>>>> Violation ratio report (violation-Ratio-report).
>>>>>> Violation ratio (violation-ratio): A ratio of a service time for which a target QoS/QoE fails to be satisfied for a corresponding UE group during a monitoring period.
>>>>>> Violation ratio of first level (violation-ratio-levell): A ratio of a service time for which a target QoS/QoE of a first level fails to be satisfied for a corresponding UE group during a monitoring period.
>>>>>> Violation ratio of second level (violation-ratio-level2): A ratio of a service time for which a target QoS/QoE of a second level fails to be satisfied for a corresponding UE group during a monitoring period.

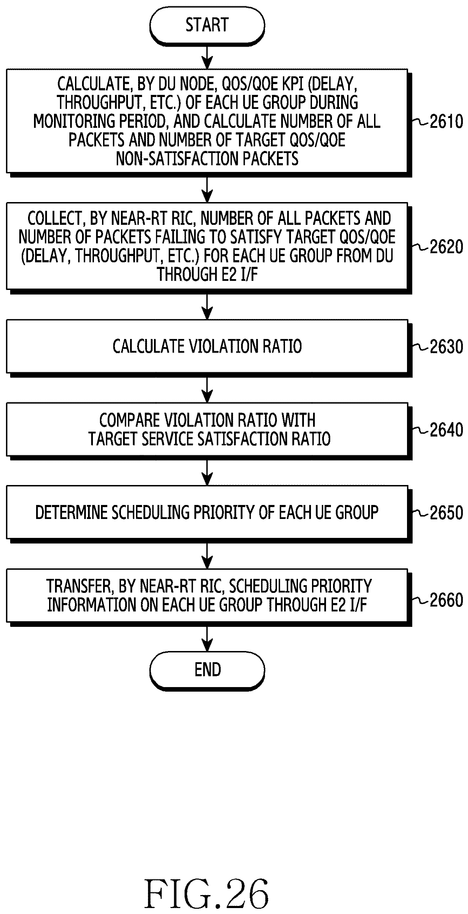

FIG. 26 illustrates a sequence of a control procedure for an O-DU, based on a target QoS/QoE violation ratio of each UE group according to various embodiments of the disclosure.

Referring to FIG. 26, in a case where a standardized interface for reporting a target QoS/QoE KPI in group units of UE groups is configured in an O-DU according to FIG. 11 described above, a procedure in which an RIC receives packet count information related to a target QoS/QoE from the O-DU and controls the O-DU, based on the received information may be described.

In operation 2610, an O-DU may calculate a QoS/QoE KPI of each UE group in a monitoring window. As an embodiment, the O-DU may calculate (or identify) the number of all packets received during a monitoring period and the number of packets failing to satisfy a target QoS/QoE. As an embodiment, the O-DU may calculate (or identify) the number of all received packets and the number of packets satisfying a target QoS/QoE.

In operation 2620, the RIC may receive, from the O-DU through an E2 interface, information on the number of all the packets and the number of packets failing to satisfy the target QoS/QoE, which are calculated by the O-DU. As an embodiment, the information on the number of all the packets and the number of packets failing to satisfy the target QoS/QoE, which are calculated by the O-DU, which are calculated by the O-DU, may be included in the indication message of operation 704 in FIG. 7 described above and be transmitted.

In operation 2630, as an embodiment, the RIC may calculate a target QoS/QoE violation ratio of each UE group, based on the information on the number of all the packets and the number of packets failing to satisfy the target QoS/QoE, which is received from the O-DU. As an embodiment, the RIC may calculate a target QoS/QoE satisfaction ratio of each UE group, based on the information on the number of all the packets and the number of packets satisfying the target QoS/QoE, which is received from the O-DU.

In operation 2640, the RIC may compare the calculated target QoS/QoE violation ratio with a targeted service satisfaction ratio (e.g., a service level agreement). Therefore, the RIC may identify a service level provided to each UE group.

In operation 2650, the RIC may determine (or decide) a scheduling priority of each UE group, based on the service level of each UE group identified in operation 2640. For example, the RIC may preferentially schedule a UE group having a determined service level not reaching a service level agreement, compared to a UE group satisfying a service level agreement. However, determining a scheduling priority, based on only a satisfaction ratio of a service level agreement of each UE group merely corresponds to an example, and the scheduling priority may be determined by the satisfaction ratio of the service level agreement and other factors.

In operation 2660, the RIC may transfer (or transmit) scheduling priority information on each UE group to the O-DU through the E2 interface. The scheduling priority information on each UE group may be included in the control request message of operation 705 in FIG. 7 described above and transmitted.

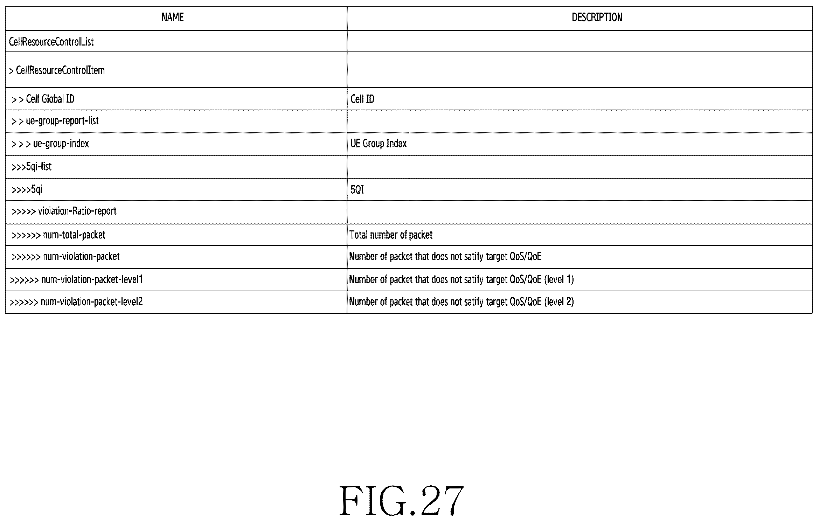

FIG. 27 illustrates target QoS/QoE-related information on each UE group reported by an O-DU according to various embodiments of the disclosure.

Referring to FIG. 27, the pieces of information included in the message transmitted by the O-DU to the RIC in operation 2620 of FIG. 26 described above may be described. As an embodiment, the message transmitted by the O-DU to the RIC may include information on the number of all packets and the number of packets failing to satisfy a target QoS/QoE, which are calculated by the O-DU. As an embodiment, the message transmitted by the O-DU to the RIC may include information on the number of all packets and the number of packets satisfying a target QoS/QoE, which are calculated by the O-DU.

More specifically, the information included in the message transmitted by the O-DU to the RIC may include at least one of the following IEs.

Cell resource control list (CellResourceControlList).
> Cell resource control item (CellResourceControlItem).
>> Cell global identifier (Cell Global ID).
>> UE group report list (ue-group-report-list).
>>> UE group index (ue-group-index).
>>> 5qi list (5qi-list).
>>>>5qi.
>>>>> Violation ratio report (violation-Ratio-report).
>>>>>> Total number of received packets (num-total-packet): The number of all the packets received by a corresponding UE group.
>>>>>> Number of packets failing to satisfy target QoS/QoE (num-violation-packet): The number of packets failing to satisfy a target QoS/QoE for a corresponding UE group.
>>>>>> Number of packets failing to satisfy target QoS/QoE of first level (num-violation-packet-level1): The number of packets failing to satisfy a target QoS/QoE of a first level for a corresponding UE group.
>>>>>> Number of packets failing to satisfy target QoS/QoE of second level (num-violation-packet-level2): The number of packets failing to satisfy a target QoS/QoE of a second level for a corresponding UE group.

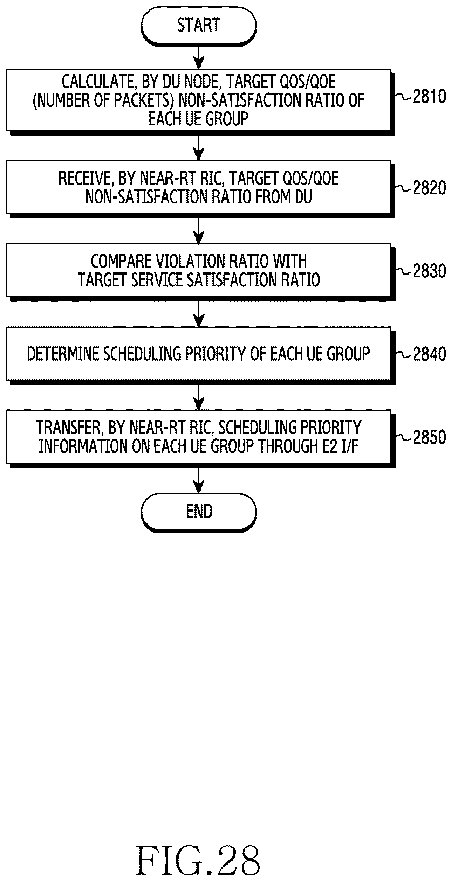

FIG. 28 illustrates a sequence of a control procedure for an O-DU, based on a target QoS/QoE violation ratio of each UE group according to various embodiments of the disclosure.

Referring to FIG. 28, in a case where a standardized interface for reporting a target QoS/QoE KPI of each UE group is configured in an O-DU according to FIG. 11 described above, a procedure in which an RIC receives target QoS/QoE violation ratio information from the O-DU and controls the O-DU, based on the received information may be described.

In operation 2810, an O-DU may calculate a QoS/QoE KPI of each UE group in a monitoring window. As an embodiment, the O-DU may calculate (or identify) the number of all packets and the number of packets failing to satisfy a target QoS/QoE. In addition, the RIC may calculate a ratio (i.e., a target QoS/QoE violation ratio) of the number of the packets failing to satisfy the target QoS/QoE to the number of all the packets.

In operation 2820, the RIC may receive, from the O-DU through an E2 interface, target QoS/QoE violation ratio information calculated by the O-DU. As an embodiment, the target QoS/QoE violation ratio information calculated by the O-DU may be included in the indication message of operation 704 in FIG. 7 described above and be transmitted.

In operation 2830, the RIC may compare the calculated target QoS/QoE violation ratio with a targeted service satisfaction ratio (e.g., a service level agreement). Therefore, the RIC may identify a service level provided to each UE group.

In operation 2840, the RIC may determine (or decide) a scheduling priority of each UE group, based on the service level of each UE group identified in operation 2830. For example, the RIC may preferentially schedule a UE group having a determined service level not reaching a service level agreement, compared to a UE group satisfying a service level agreement. However, determining a scheduling priority, based on only a satisfaction ratio of a service level agreement of each UE group merely corresponds to an example, and the scheduling priority may be determined by the degree of the service level agreement and other factors.

In operation 2850, the RIC may transfer (or transmit) scheduling priority information on each UE group to the O-DU through the E2 interface. The scheduling priority information on each UE group may be included in the control request message of operation 705 in FIG. 7 described above and transmitted.

The subject that performs an operation (e.g., operation 2630 and operation 2810) of calculating a target QoS/QoE violation ratio, based on the number of all packets and the number of packets failing to satisfy a target QoS/QoE in FIG. 26 and

FIG. 28 described above may be determined in consideration of at least one of the computational capability of the O-DU, the amount of power, or the signaling overhead between the RIC and the O-DU. For example, when the computational capability of the O-DU is insufficient or the available amount of power is low, the operation of calculating a target QoS/QoE violation ratio may be performed by the RIC (e.g., operation 2630). Alternatively, when the computational capability of the O-DU is sufficient and the available amount of power is enough, the operation of calculating a target QoS/QoE violation ratio may be performed by the O-DU (e.g., operation 2810).

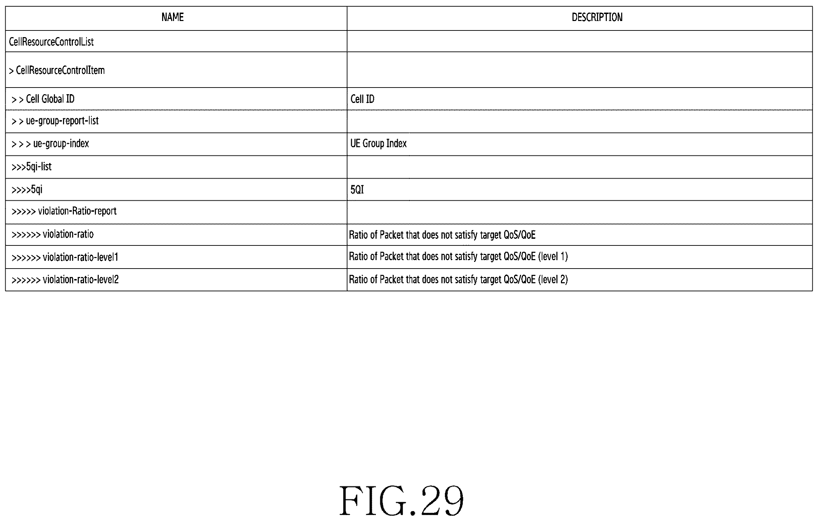

FIG. 29 illustrates target QoS/QoE-related information on each UE group reported by an O-DU according to various embodiments of the disclosure.

Referring to FIG. 29, the pieces of information included in the message transmitted by the O-DU to the RIC in operation 2820 of FIG. 28 described above may be described. As an embodiment, the message may include target QoS/QoE violation ratio information calculated by the O-DU.

More specifically, the information included in the message transmitted by the O-DU to the RIC may include at least one of the following IEs.

Cell resource control list (CellResourceControlList).
> Cell resource control item (CellResourceControlItem).
>> Cell global identifier (Cell Global ID).
>> UE group report list (ue-group-report-list).
>>> UE group index (ue-group-index).
>>> 5qi list (5qi-list).
>>>>5qi.
>>>>> Violation ratio report (violation-Ratio-report).
>>>>>> Violation ratio (violation-ratio): A ratio of the number of packets failing to satisfy a target QoS/QoE for a corresponding UE group during a monitoring period.
>>>>>> Violation ratio of first level (violation-ratio-levell): A ratio of the number of packets failing to satisfy a target QoS/QoE of a first level for a corresponding UE group during a monitoring period.
>>>>>> Violation ratio of second level (violation-ratio-level2): A ratio of the number of packets failing to satisfy a target QoS/QoE of a second level for a corresponding UE group during a monitoring period.

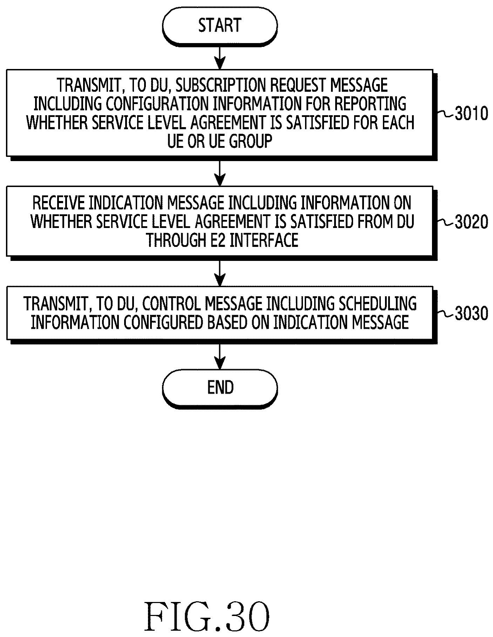

FIG. 30 illustrates a sequence of a control procedure between an RIC and an O-DU, based on a target QoS/QoE violation ratio according to various embodiments of the disclosure.

Referring to FIG. 30, a procedure for controlling, by an RIC, each UE or UE group, based on target QoS/QoE violation ratio information thereof may be described.

In operation 3010, an RIC may transmit, to a DU, a subscription request message including configuration information allowing the O-DU to report whether a service level agreement of each UE or UE group is satisfied. More specifically, the RIC may configure (or transmit) a standardized interface used for the O-DU to report a target QoS/QoE KPI in units of UEs or UE groups. For example, the standardized interface may be included in a subscription request message (e.g., operation 702 in FIG. 7) transmitted by the RIC to the O-DU. When a standardized interface for reporting a target QoS/QoE KPI in units of UEs is configured, an IE included in the standardized interface may include at least one of the IEs included in FIG. 10 described above. Alternatively, when a standardized interface for reporting a target QoS/QoE KPI in group units of UE groups is configured, an IE included in the standardized interface may include at least one of the IEs included in FIG. 11 described above. The O-DU may calculate a QoS/QoE KPI in a monitoring window. Alternatively, the O-DU may calculate even a target QoS/QoE KPI violation ratio, based on the calculated QoS/QoE KPI.

In operation 3020, the RIC may receive an indication message including information on whether the service level agreement is satisfied, from the DU through an E2 interface. The information on whether the service level agreement is satisfied may include at least one of information on a QoS/QoE KPI measurement value in a monitoring window or information on a target QoS/QoE KPI violation ratio calculated based on the QoS/QoE KPI measurement value. When only the information on the QoS/QoE KPI measurement value in the monitoring window is received, the RIC may calculate a target QoS/QoE KPI violation ratio, based on the QoS/QoE KPI. The RIC may compare the target QoS/QoE violation ratio with a targeted service satisfaction ratio (e.g., a service level agreement). Therefore, the RIC may identify a service level provided to each UE (group). Then, the RIC may determine (or decide) a scheduling priority of each UE (group), based on the service level of each UE (group). For example, the RIC may preferentially schedule a UE (group) having a determined service level not reaching a service level agreement, compared to a UE (group) satisfying a service level agreement. However, determining a scheduling priority, based on only a satisfaction ratio of a service level agreement of each UE (group) merely corresponds to an example, and the scheduling priority may be determined by the satisfaction ratio of the service level agreement and other factors.

In operation 3030, the RIC may transmit, to the DU, a control message including scheduling information configured based on the indication message. The scheduling information may include scheduling priority information on each UE (group).

An operation method of a radio access network intelligent controller (RIC) for ensuring a service level agreement in a wireless communication system according to an embodiment of the disclosure may include transmitting, to an open radio access network distributed unit (O-DU), a subscription request message including configuration information for reporting whether the service level agreement is satisfied for each terminal or terminal group, receiving an indication message including information on whether the service level agreement is satisfied, from the O-DU through an E2 interface, and transmitting, to the O-DU, a control message including scheduling information configured based on the indication message.

In an embodiment, the configuration information may include at least one of an identifier of the terminal, an identifier of the terminal group, a target quality of service (QoS)/quality of experience (QoE), a target QoS/QoE for each service level, a window for monitoring whether the target QoS/QoE is violated, a report method for reporting whether the service level agreement is satisfied, or information on an index of a network slice, and the network slice may be a network slice to which the terminal or the terminal group belongs.

In an embodiment, the information on whether the service level agreement is satisfied may include a measurement value based on the report method or a violation ratio value of the service level agreement calculated based on the measurement value.

In an embodiment, the measurement value may be a value obtained through measurement based on a time for which the terminal or the terminal group receives service from a network connected to the O-DU in the window or based on the number of received packets.

In an embodiment, the scheduling information may include information on a scheduling priority of the each terminal or terminal group.

An operation method of an open radio access network distributed unit (O-DU) for ensuring a service level agreement in a wireless communication system according to an embodiment of the disclosure may include receiving, from a radio access network intelligent controller (RIC), a subscription request message including configuration information for reporting whether the service level agreement is satisfied for each terminal or terminal group, transmitting an indication message including information on whether the service level agreement is satisfied, to the RIC through an E2 interface, and receiving, from the RIC, a control message including scheduling information configured based on the indication message.

In an embodiment, the configuration information may include at least one of an identifier of the terminal, an identifier of the terminal group, a target quality of service (QoS)/quality of experience (QoE), a target QoS/QoE for each service level, a window for monitoring whether the target QoS/QoE is violated, a report method for reporting whether the service level agreement is satisfied, or information on an index of a network slice, and the network slice may be a network slice to which the terminal or the terminal group belongs.

In an embodiment, the information on whether the service level agreement is satisfied may include a measurement value based on the report method or a violation ratio value of the service level agreement calculated based on the measurement value.

In an embodiment, the measurement value may be a value obtained through measurement based on a time for which the terminal or the terminal group receives service from a network connected to the O-DU in the window or based on the number of received packets.

In an embodiment, the scheduling information may include information on a scheduling priority of the each terminal or terminal group.

A radio access network intelligent controller (RIC) for ensuring a service level agreement in a wireless communication system according to an embodiment of the disclosure may include at least one transceiver, and at least one processor operably coupled to the at least one transceiver, wherein the at least one processor is configured to transmit, to an open radio access network distributed unit (O-DU), a subscription request message including configuration information for reporting whether the service level agreement is satisfied for each terminal or terminal group, receive an indication message including information on whether the service level agreement is satisfied, from the O-DU through an E2 interface, and transmit, to the O-DU, a control message including scheduling information configured based on the indication message.

In an embodiment, the configuration information may include at least one of an identifier of the terminal, an identifier of the terminal group, a target quality of service (QoS)/quality of experience (QoE), a target QoS/QoE for each service level, a window for monitoring whether the target QoS/QoE is violated, a report method for reporting whether the service level agreement is satisfied, or information on an index of a network slice, and the network slice may be a network slice to which the terminal or the terminal group belongs.

In an embodiment, the information on whether the service level agreement is satisfied may include a measurement value based on the report method or a violation ratio value of the service level agreement calculated based on the measurement value.

In an embodiment, the measurement value may be a value obtained through measurement based on a time for which the terminal or the terminal group receives service from a network connected to the O-DU in the window or based on the number of received packets.

In an embodiment, the scheduling information may include information on a scheduling priority of the each terminal or terminal group.

An open radio access network distributed unit (O-DU) for ensuring a service level agreement in a wireless communication system according to an embodiment of the disclosure may include at least one transceiver, and at least one processor operably coupled to the at least one transceiver, wherein the at least one processor is configured to receive, from a radio access network intelligent controller (RIC), a subscription request message including configuration information for reporting whether the service level agreement is satisfied for each terminal or terminal group, transmit an indication message including information on whether the service level agreement is satisfied, to the RIC through an E2 interface, and receive, from the RIC, a control message including scheduling information configured based on the indication message.

In an embodiment, the configuration information may include at least one of an identifier of the terminal, an identifier of the terminal group, a target quality of service (QoS)/quality of experience (QoE), a target QoS/QoE for each service level, a window for monitoring whether the target QoS/QoE is violated, a report method for reporting whether the service level agreement is satisfied, or information on an index of a network slice, and the network slice may be a network slice to which the terminal or the terminal group belongs.

In an embodiment, the information on whether the service level agreement is satisfied may include a measurement value based on the report method or a violation ratio value of the service level agreement calculated based on the measurement value.

In an embodiment, the measurement value may be a value obtained through measurement based on a time for which the terminal or the terminal group receives service from a network connected to the O-DU in the window or based on the number of received packets.

In an embodiment, the scheduling information may include information on a scheduling priority of the each terminal or terminal group.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a radio access network intelligent controller (RIC) in a wireless communication system, the method comprising:
transmitting, to an open radio access network distributed unit (O-DU), a subscription request message including configuration information for reporting whether a service level agreement is satisfied for each terminal or terminal group;
receiving, from the O-DU through an E2 interface, an indication message including information on whether the service level agreement is satisfied; and
transmitting, to the O-DU, a control message including scheduling information configured based on the indication message.

2. The method of claim 1, wherein the configuration information comprises at least one of an identifier of the terminal, an identifier of the terminal group, a target quality of service (QoS), a target quality of experience (QoE), a target QoS for each service level, a target QoE for each service level, a window for monitoring whether the target QoS is violated, a window for monitoring whether the target QoE is violated, a report method for reporting whether the service level agreement is satisfied, or information on an index of a network slice, and
wherein the network slice is a network slice to which the terminal or the terminal group belongs.

3. The method of claim 2, wherein the information on whether the service level agreement is satisfied comprises a measurement value based on the report method or a violation ratio value of the service level agreement, calculated based on the measurement value.

4. The method of claim 3, wherein the measurement value is a value measured based on a time for which the terminal or the terminal group receives service from a network connected to the O-DU in the window, or based on the number of received packets.

5. A method performed by an open radio access network distributed unit (O-DU) in a wireless communication system, the method comprising:
receiving, from a radio access network intelligent controller (RIC), a subscription request message including configuration information for reporting whether a service level agreement is satisfied for each terminal or terminal group;
transmitting, to the RIC through an E2 interface, an indication message including information on whether the service level agreement is satisfied; and
receiving, from the RIC, a control message including scheduling information configured based on the indication message.

6. The method of claim 5, wherein the configuration information comprises at least one of an identifier of the terminal, an identifier of the terminal group, a target quality of service (QoS), a target quality of experience (QoE), a target QoS for each service level, a target QoE for each service level, a window for monitoring whether the target QoS is violated, a window for monitoring whether the target QoE is violated, a report method for reporting whether the service level agreement is satisfied, or information on an index of a network slice, and
wherein the network slice is a network slice to which the terminal or the terminal group belongs.

7. The method of claim 6, wherein the information on whether the service level agreement is satisfied comprises a measurement value based on the report method or a violation ratio value of the service level agreement, calculated based on the measurement value.

8. The method of claim 7, wherein the measurement value is a value measured based on a time for which the terminal or the terminal group receives service from a network connected to the O-DU in the window, or based on the number of received packets.

9. A radio access network intelligent controller (RIC) in a wireless communication system, the RIC comprising:
a transceiver; and
at least one processor coupled with the transceiver and configured to:
transmit, to an open radio access network distributed unit (O-DU), a subscription request message including configuration information for reporting whether a service level agreement is satisfied for each terminal or terminal group,
receive, from the O-DU through an E2 interface, an indication message including information on whether the service level agreement is satisfied, and
transmit, to the O-DU, a control message including scheduling information configured based on the indication message.

10. The RIC of claim 9, wherein the configuration information comprises at least one of an identifier of the terminal, an identifier of the terminal group, a target quality of service (QoS), a target quality of experience (QoE), a target QoS for each service level, a target QoE for each service level, a window for monitoring whether the target QoS is violated, a window for monitoring whether the target QoE is violated, a report method for reporting whether the service level agreement is satisfied, or information on an index of a network slice, and
wherein the network slice is a network slice to which the terminal or the terminal group belongs.

11. The RIC of claim 10, wherein the information on whether the service level agreement is satisfied comprises a measurement value based on the report method or a violation ratio value of the service level agreement, calculated based on the measurement value.

12. The RIC of claim 11, wherein the measurement value is a value measured based on a time for which the terminal or the terminal group receives service from a network connected to the O-DU in the window, or based on the number of received packets.

13. An open radio access network distributed unit (O-DU) in a wireless communication system, the O-DU comprising:
a transceiver; and
at least one processor coupled with the transceiver and configured to:
receive, from a radio access network intelligent controller (RIC), a subscription request message including configuration information for reporting whether a service level agreement is satisfied for each terminal or terminal group,
transmit, to the RIC through an E2 interface, an indication message including information on whether the service level agreement is satisfied, and
receive, from the RIC, a control message including scheduling information configured based on the indication message.

14. The O-DU of claim 13, wherein the configuration information comprises at least one of an identifier of the terminal, an identifier of the terminal group, a target quality of service (QoS), a target quality of experience (QoE), a target QoS for each service level, a target QoE for each service level, a window for monitoring whether the target QoS is violated, a window for monitoring whether the target QoE is violated, a report method for reporting whether the service level agreement is satisfied, or information on an index of a network slice, and
wherein the network slice is a network slice to which the terminal or the terminal group belongs.

15. The O-DU of claim 14, wherein the information on whether the service level agreement is satisfied comprises a measurement value based on the report method or a violation ratio value of the service level agreement, calculated based on the measurement value.
